# EUROPÄISCHE PATENTSCHRIFT

(11) **EP 4 172 033 B1**
(45) Veröffentlichungstag und Bekanntmachung des Hinweises auf die Patenterteilung: **06.08.2025**
(21) Anmeldenummer: 21733760.9
(22) Anmeldetag: 11.06.2021
(51) Int. Cl.: B62K 3/00, B62H 1/08, B62J 11/13, B62K 3/10, B62J 25/06, B62K 15/00

(54) **ALPINES FAHRRAD**
ALPINE BICYCLE
VÉLO ALPIN

(30) Priorität: 25.06.2020 DE 102020116725
(43) Veröffentlichungstag der Anmeldung: 03.05.2023
(73) Patentinhaber: Micado Smart Engineering GmbH, 9903 Oberlienz (AT)
(72) Erfinder: MEINDL, Edwin, 9782 Nikolsdorf (AT); RÖDLACH, Thomas, 9900 Lienz (AT); AUER, Daniel, 9990 Nußdorf-Debant (AT); MAIR, Simon, 9908 Amlach (AT)
(74) Vertreter: Dilg, Haeusler, Schindelmann Patentanwaltsgesellschaft mbH
(86) Internationale Anmeldenummer: PCT/EP2021/065827
(87) Internationale Veröffentlichungsnummer: WO 2021/259678

(56) Entgegenhaltungen:
- CN-A- 101 784 436
- DE-A1- 102008 026 812
- DE-A1- 2 834 384
- DE-A1- 4 446 112
- US-A1- 2017 240 241
- US-B2- 9 643 680

## Beschreibung

### Technisches Gebiet

Die vorliegende Erfindung betrifft ein Fahrrad zum Bergabfahren sowie ein Verfahren zum Bereitstellen eines Fahrrads zum Bergabfahren.

### Hintergrund der Erfindung

Es ist bekannt, Fahrräder, sogenannte Mountainbikes, geländegängig auszubilden, um damit im Gelände und insbesondere in den Bergen Fahrrad zu fahren. Dabei ist das Bergabfahren sehr beliebt, wobei insbesondere sehr hohe Geschwindigkeiten erreicht werden können. Um eine ausreichende Robustheit und einen ausreichenden Komfort bereitzustellen, weisen Mountainbikes groß dimensionierte Rahmen sowie komplexe Feder- und Bremssysteme auf. Dies führt zu einer hohen Komplexität und einem hohen Gewicht von Mountainbikes. Aus diesem Grund sind Mountainbikes im schwergängigen Gelände weniger geeignet von einem Bergwanderer oder Kletterer transportiert zu werden.

Das Dokument DE 44 46 112 A1 offenbart die Merkmalen der Präambel des Anspruchs 1.

### Darstellung der Erfindung

Es ist eine Aufgabe der vorliegenden Erfindung, ein leichtes Bergabfahrrad bereitzustellen, welches insbesondere für den Wander- und Klettersport geeignet ist.

Diese Aufgabe wird mit einem Fahrrad zum Bergabfahren sowie einem Verfahren zum Bereitstellen eines Fahrrads zum Bergabfahren gemäß den Gegenständen der unabhängigen Ansprüche gelöst.

Gemäß einem ersten Aspekt der vorliegenden Erfindung wird ein Fahrrad zum Bergabfahren beschrieben. Das Fahrrad weist einen Vorderradbereich, einen Hinterradbereich sowie eine Trägerstange auf, welche den Vorderradbereich und den Hinterradbereich miteinander koppelt. Die Trägerstange weist zum Aus- und Zusammenklappen der Trägerstange zumindest ein Gelenk auf. Die Trägerstange weist einen Vorderstangenabschnitt zwischen dem Vorderradbereich und dem Gelenk und einen Hinterstangenabschnitt zwischen dem Hinterradbereich und dem Gelenk auf.

Das Fahrrad weist ferner eine Fußstange auf, welche mit einem Koppelabschnitt schwenkbar an der Trägerstange befestigt ist. Die Fußstange weist an einem, dem Koppelabschnitt gegenüberliegenden Fußabschnitt einen Fußablagebereich auf zum Ablegen von Füßen eines Benutzers des Fahrrads.

Ferner weist das Fahrrad ein Spannseilsystem mit einem ersten Seilspannabschnitt und einem zweiten Seilspannabschnitt auf, wobei der erste Seilspannabschnitt an dem Fußabschnitt und dem Vorderstangenabschnitt und der zweite Seilspannabschnitt an dem Fußabschnitt und dem Hinterstangenabschnitt derart gekoppelt sind, dass bei Ausübung einer Gewichtskraft auf den Fußabschnitt die Fußstange in Gewichtskraftrichtung ausrichtbar ist und das Spannseilsystem spannbar ist.

Gemäß einem weiteren Aspekt der vorliegenden Erfindung wird ein Verfahren zum Bereitstellen eines oben beschriebenen Fahrrads zum Bergabfahren bereitgestellt. Das Verfahren weist ein Aus- und Zusammenklappen der Trägerstange und ein Schwenken der Fußstange auf, sodass eine Gewichtskraft auf den Fußabschnitt der Fußstange ausübbar ist, um die Fußstange in Gewichtskraftrichtung auszurichten und das Spannseilsystem gespannt wird.

Das erfindungsgemäße Fahrrad ist insbesondere dazu konzipiert, leicht und einfach ausgebildet zu werden, um in einem zusammenklappen Zustand einfach und kraftschonend von einem Benutzer getragen zu werden. In einem ausgeklappten Zustand, d. h. in einem aktiven Betriebszustand, kann der Benutzer sich auf das Fahrrad stellen und bergabfahren. Mit dem erfindungsgemäßen Fahrrad wird insbesondere ein einfaches System bereitgestellt, mit welchem dennoch ein für das Bergabfahren robustes Fahrrad bereitgestellt wird.

Die Trägerstange kann dabei aus einem Leichtbaumaterial, wie beispielsweise Aluminium oder einem Faserverbundwerkstoff, wie beispielsweise ein Kohlefaserverbundwerkstoff oder ein Glasfaserverbundwerkstoffe, hergestellt werden. Ferner kann die Trägerstange aus einem Hohlprofil bestehen.

Das Gelenk wird beispielsweise mittels eines Drehbolzens bereitgestellt, welcher entlang seiner Erstreckungsrichtung eine Schwenkachse für zumindest den Vorderstangenabschnitt oder den Hinterstangenabschnitt bildet. Zwischen dem Vorderstangenabschnitt und dem Hinterstangenabschnitt können weitere Stangenabschnitte, wie beispielsweise der unten beschriebenen Mittelstangenabschnitt, eingeführt werden. Beispielsweise kann der Vorderstangenabschnitt direkt über das Gelenk an dem Hinterstangenabschnitt befestigt werden. Das Gelenk kann beispielsweise in diesem Fall zwei Drehbolzen aufweisen, wobei der Vorderstangenabschnitt um einen ersten Drehbolzen und der Hinterstangenabschnitt um einen zweiten Drehbolzen drehbar ist. Der erste und der zweite Drehbolzen können dabei zueinander parallele Schwenkachsen ausbilden oder windschief bzw. nicht parallel zueinander ausgerichtete Schwenkachsen ausbilden.

Gemäß einer beispielhaften Ausführungsform weist das Gelenk eine Lagerhülse auf, welche derart ausgebildet ist, dass die Trägerstange zum Aus- und Zusammenklappen gelenkig ist,

Gemäß einer beispielhaften Ausführungsform ist zumindest der erste Seilspannabschnitt oder der zweite Seilspannabschnitt im Inneren der Lagerhülse befestigt oder verläuft durch die Lagerhülse teilweise.

Gemäß einer beispielhaften Ausführungsform weist das Seilspannsystem einen dritten Seilspannabschnitt auf, welcher entlang einer Oberseite verläuft und an gegenüberliegenden Seiten bezüglich des Gelenkes an der Trägerstange befestigt ist, wobei der dritte Spannseilabschnitt derart konfiguriert ist, dass dieser durch Spannung ein Drehmoment um das Gelenk erzeugt entgegen dem Drehmoment, welches durch den ersten Spannseilabschnitt und den zweiten Spannseilabschnitt generierbar ist.

Gemäß einer beispielhaften Ausführungsform weist das Fahrrad einen Schnellspanner auf, welcher den dritten Spannseilabschnitt an der Trägerstange lösbar fixiert.

Gemäß einer beispielhaften Ausführungsform weist das Fahrrad einen Bremshebel auf, der an dem Hinterstangenabschnitt schwenkbar befestigt ist, derart, dass der Bremshebel in Richtung Hinterrad schwenkbar ist und in einer Sperrposition mit dem Hinterrad derart koppelbar ist, dass eine weitere Drehung des Hinterrads verhinderbar ist.

Das Gelenk kann somit mit einer Lagerhülse bzw. als Hohlachse ausgebildet werden. Beispielsweise kann die Lagerhülse drehbar an dem Vorderstangenabschnitt befestigt sein. Der Vorderstangenabschnitt kann am Gelenk eine Gabelform aufweisen und die Lagerhülse teilweise umschließen oder eine entsprechende Öffnung aufweisen und die Lagerhülse vollständig umschließen. Ferner sind an der Lagerhülse der weitere Verbindungspartner, wie beispielsweise der Mittelstangenabschnitt oder der Hinterstangenabschnitt gekoppelt. Der Vorderstangenabschnitt einerseits oder der Mittelstangenabschnitt oder der Hinterstangenabschnitt andererseits können drehfest mit der Lagerhülse ausgebildet werden und zumindest ein anderer Verbindungspartner drehbar mit der Lagerhülse ausgebildet sein. Der erste Seilspannabschnitt und/oder der zweite Seilspannabschnitt können an der Lagerhülse befestigt werden. Insbesondere können der erste Seilspannabschnitt und/oder der zweite Seilspannabschnitt im Inneren der Lagerhülse befestigt werden.

In einem alternativen Ausführungsbeispiel, in welchen der erste Seilspannabschnitt und der zweite Seilabspannabschnitt ein gemeinsames Spannseil bilden, kann das Spannseil von der Fußstange durch die Lagerhülse und entsprechend durch den Vorderstangenabschnitt geführt werden und auf der gegenüberliegenden Seite zurück an die Fußstange geführt werden.

Insbesondere bei Kopplung des Spannseilsystems an die Lagerhülse wird eine mechanisch bevorzugte Kopplung, insbesondere eine momentenfreie Kopplung ermöglicht, da die Drehachse des Gelenks im Inneren der Lagerhülse gebildet wird und somit die Fixierung des Spannseilsystems auf bzw. in der nahen Umgebung der Drehachse des Gelenks vorliegt, sodass es beispielsweise zu keiner Verbindung oder Vertretung des Spannseilsystems kommt. Insbesondere wird dann kein bzw. kaum ein negatives Moment auf einen Spannhebel zur Befestigung der Spannseile übertragen.

Entsprechend dem vorderen Gelenk kann ferner das unten beschriebene weitere Gelenk mit einer Lagerhülse ausgebildet werden.

Von der Trägerstange erstreckt sich die Fußstange, welche mit einem Koppelabschnitt schwenkbar an der Trägerstange, d. h. beispielsweise an dem Vorderstangenabschnitt, dem Hinterstangenabschnitt oder einem Mittelstangenabschnitt, befestigt ist. An dem, dem Koppelabschnitt gegenüberliegenden Flussabschnitt ist ein Fußablagebereich ausgebildet, auf welchen der Benutzer sich mit seinen Füßen beim Bergabfahren auf das Fahrrad stellen kann.

Zur Stabilisierung der Trägerstange in dem Betriebszustand, d. h. in dem aufgeklappten Zustand, wird das Spannseilsystem vorgesehen. Dieses weist ein Seil bzw. mehrere Seile auf, wobei ein erster Seilspannabschnitt von dem Fußabschnitt der Fußstange in Richtung Vorderstangenabschnitt verläuft und ein zweiter Seilspannabschnitt von dem Fußabschnitt zu dem Hinterstangenabschnitt verläuft. Die Fußstange drückt den ersten Seilspannabschnitt und den zweiten Seilspannabschnitt an deren Kopplung mit dem Fußabschnitt von der Trägerstange fort, sodass ein gespanntes und somit stabiles System zwischen der Trägerstange, der Fußstange und dem Spannseilsystem hergestellt wird.

Die Seilspannabschnitte können aus Seilen gebildet werden, bestehend aus Naturfasern, wie beispielsweise Hanf, oder aus Kunstfasern. Ferner können die Seilspannabschnitte seilartige, bandartige oder riemenartige Elemente aufweisen. Ebenfalls können die Seilspannabschnitte aus Kettengliedern gebildet werden.

Da der Benutzer seine Gewichtskraft über den Fußabschnitt in das Fahrrad einleitet, richtet sich die schwenkbare Fußstange in Richtung der Gewichtskraft aus und spannt damit automatisch den ersten Seilspannabschnitt und den zweiten Seilspannabschnitt. Dies führt dazu, dass die Trägerstange mit dem Vorderstangenabschnitt und dem Hinterstangenabschnitt während des Betriebs des Fahrrads, d. h. beispielsweise während des Bergabfahrens, in Betriebsposition, d. h. in dem aufgeklappten Zustand verharren. Auch bei Geländeunebenheiten führt die Gewichtskraft des Benutzers dazu, dass die Betriebsposition der Trägerstange immer sichergestellt bleibt.

Aufgrund dieser Konstruktion des Fahrrads ist es beispielsweise nicht notwendig, komplexe Mechaniken und Befestigungseinrichtungen vorzusehen, die beispielsweise das Gelenk oder die Fußstange in einer bestimmten Position arretiert. Allein durch die Einleitung der Gewichtskraft wird eine starre Betriebsposition des Fahrrads gewährleistet. Somit wird ein leichtes Fahrrad ohne komplexe Mechaniken bereitgestellt, welches schnell und einfach aus- und zusammenklappbar ist. Aufgrund der leichten und kompakten Konstruktion ist das Fahrrad somit insbesondere für den Wandersport und Klettersport geeignet, da es beispielsweise einfach gehandhabt werden kann und zum Beispiel in einem Rucksack verstaut werden kann.

Gemäß einer weiteren beispielhaften Ausführungsform weist die Trägerstange eine Bodenseite (d. h. eine erste Seite/Oberfläche) und eine, zur Bodenseite gegenüberliegende Oberseite (d. h. eine zweite Seite/Oberfläche) auf. Der Vorderradbereich weist einen Befestigungsabschnitt für ein Vorderrad und der Hinterradbereich einen Befestigungsabschnitt für ein Hinterrad auf, welche in einem unteren Bereich der Bodenseite angeordnet sind. Die Fußstange erstreckt sich von der Bodenseite der Trägerstange in den unteren Bereich. Aufgrund der Auflage der Räder auf einem Boden werden in dem Vorderradbereich und in dem Hinterradbereich Auflagerkräfte eingeleitet, welche der Gewichtskraft des Benutzers, die im Fußablagebereich der Fußstange eingeleitet werden, entgegenwirken. Durch die Gewichtskraft des Benutzers, welcher über den Fußablagebereich auf die Seilspannabschnitte übertragen werden, bleiben die Seilspannabschnitte sicher gespannt, auch wenn, beispielsweise gegenüber Vibrationen oder über Kontaktverlust der Räder mit dem Boden, die Auflagerkräfte kurzzeitig nicht wirken.

Gemäß einer weiteren beispielhaften Ausführungsform ist der erste Seilspannabschnitt und/oder der zweite Seilspannabschnitt von der Bodenseite auf eine gegenüberliegende Oberseite der Trägerstange führbar und auf der Oberseite, insbesondere lösbar, befestigt. Insbesondere mit der lösbaren Befestigung der Seilspannabschnitte auf der Oberseite der Trägerstange, kann der Benutzer in einfacher Art und Weise die Seilspannabschnitte befestigen und beispielsweise spannen.

Gemäß einer weiteren beispielhaften Ausführungsform erstreckt sich der erste Seilspannabschnitt entlang der Oberseite über das Gelenk derart, dass der erste Seilspannabschnitt an dem Vorderstangenabschnitt von der Bodenseite auf die Oberseite der Trägerstange geführt ist und an dem Trägerstangenabschnitt, welcher gegenüberliegend zum Vorderstangenabschnitt am Gelenk anliegt, auf der Oberseite fixiert ist.

Zusätzlich oder alternativ erstreckt sich in einer weiteren beispielhaften Ausführungsform der zweite Seilspannabschnitt entlang der Oberseite über das Gelenk derart, dass der zweite Seilspannabschnitt an dem Hinterstangenabschnitt von der Bodenseite auf die Oberseite der Trägerstange geführt ist und an dem Trägerstangenabschnitt, welcher gegenüberliegend zum Hinterstangenabschnitt am Gelenk anliegt, auf der Oberseite fixiert ist.

Der erste Seilspannabschnitt wird sozusagen entlang der Oberfläche über das Gelenk geführt und wird an einem angrenzenden Abschnitt, beispielsweise dem Mittelstangenabschnitt oder dem Hinterstangenabschnitt befestigt. Dabei kann in einer weiteren beispielhaften Ausführungsform der erste Seilspannabschnitt über das Gelenk und über das unten beschriebene weitere Gelenk geführt werden und an dem Hinterstangenabschnitt befestigt werden. Entsprechend kann der zweite Seilspannabschnitt entlang der Oberfläche über das Gelenk und/oder das weitere Gelenk geführt werden und entsprechend an dem Mittelstangenabschnitt oder dem Vorderstangenabschnitt befestigt werden.

In der beispielhaften Ausführungsform wird somit der Krafteinleitungspunkt der Gewichtskraft des Benutzers, welche von dem Benutzer über den Fußablagebereich auf den ersten Seilspannabschnitt und den zweiten Seilspannabschnitt übertragen wird, auf die Oberseite der Trägerstange gelegt. Somit bewirken die Seilkräfte, welche über die gelenküberführenden Seilspannabschnitte auf der Oberseite der Trägerstange eingeleitet werden, einen Moment um das Gelenk bzw. weitere Gelenk, welches dieselbe Richtung aufweist, wie die Auflagerkräfte, die über die Räder induziert werden. Mit anderen Worten erzeugen die Auflagerkräfte und die Seilspannabschnitte ein gemeinsam gerichtetes Moment um das Gelenk, welche die Trägerstange bzw. den Vorderstangenabschnitt und den Hinterstangenabschnitt in den aufgeklappten Zustand, d. h. den Betriebszustand, drängt bzw. vorspannt. Aufgrund der Einleitung der Seilkräfte an dem Vorderstangenabschnitt und dem Hinterstangenabschnitt, die wiederum durch die Gewichtskraft des Benutzers erzeugt werden, werden die stabilisierenden Momente an den Gelenken, welche Momente die Trägerstange in dem aufgeklappten Zustand halten, verstärkt.

Gemäß einer weiteren beispielhaften Ausführungsform definieren der Vorderstangenabschnitt und der Hinterstangenabschnitt in einem ausgeklappten Zustand eine Betriebsposition des Fahrrads, wobei das Gelenk derart ausgebildet ist, dass bei Vorliegen des Vorderstangenabschnitts und des Hinterstangenabschnitts (und optional des Mittelstangeabschnitts) in Betriebsposition eine Klappbewegung des Vorderstangenabschnitts und des Hinterstangenabschnitts in Richtung Unterseite frei ist und eine Klappbewegung in Richtung Oberseite gesperrt ist.

Das Gelenk ist beispielsweise derart ausgebildet, dass von der Betriebsposition der Vorderstangenabschnitt und der Hinterstangenabschnitt um 90° geschwenkt werden können. Beispielsweise kann das Gelenk derart ausgebildet sein, dass in Betriebsposition oberhalb des Gelenks in Richtung Oberseite die Stangenenden der Stangenabschnitte anliegen, sodass kein Schwenken der Stangenabschnitte aus der Betriebsposition in Richtung Oberseite möglich ist. Hierzu kann beispielsweise eine Drehbolzenlagerung des Gelenks an der Unterseite der angrenzenden Stangenabschnitte ausgebildet sein, sodass ein Schwenken der Stangenabschnitte nur in Richtung deren Unterseite aus der Betriebsposition möglich ist.

Gemäß einer weiteren beispielhaften Ausführungsform kann das Gelenk oder das weitere Gelenk derart ausgebildet sein, dass bei Vorliegen des Vorderstangenabschnitts und des Hinterstangenabschnitts in Betriebsposition eine Klappbewegung des Vorderstangenabschnitts und des Hinterstangenabschnitts bzw. des Mittelstangenabschnitts in Richtung Oberseite frei ist und eine Klappbewegung in Richtung Unterseite gesperrt ist. Somit bewirken die Seilkräfte, welche z. B. an der Unterseite der Trägerstange eingeleitet werden, einen Moment um das Gelenk bzw. weitere Gelenk, welches die entgegengesetzte Richtung aufweist, wie die Auflagerkräfte, die über die Räder induziert werden. Mit anderen Worten erzeugen die Auflagerkräfte und die Seilspannabschnitte gegenläufige Momente um das Gelenk bzw. weitere Gelenk, um die Trägerstange bzw. die Stangenabschnitte in den aufgeklappten Zustand, d. h. den Betriebszustand, zu halten.

Gemäß einer weiteren beispielhaften Ausführungsform ist das Gelenk und/oder das weitere Gelenk frei schwenkbar und frei von einer Arretiereinrichtung. Erfindungsgemäß ist in Betriebsposition ein Schwenken des Vorderstangenabschnitts und des Hinterstangenabschnitt (bzw. des Mittelstangenabschnitt) in Richtung Oberseite aufgrund der Ausbildung des Gelenks und der Stangenabschnitte gesperrt. Ein Schwenken des Vorderstangenabschnitts und des Hinterstangenabschnitt (bzw. des Mittelstangenabschnitt) in Richtung Bodenseite wird durch die Auflagerkräfte der Räder und zudem durch die Seilkräfte der Seilspannabschnitte, die durch die Gewichtskraft des Benutzers erzeugt werden, verhindert. Weitere gewichtsintensive und komplexe Arretierungsvorrichtungen zum Fixieren der Stangenabschnitte in Betriebsposition können somit nicht notwendig sein.

Gemäß einer weiteren beispielhaften Ausführungsform ist die Fußstange am Gelenk befestigt. Beispielsweise kann das Gelenk eine massive Grundplatte aufweisen, die zudem eine schwenkbare Fixierung der Fußstange zulässt. Dies führt zu einer fertigungstechnischen Vereinfachung des erfindungsgemäßen Fahrrads.

Gemäß einer weiteren beispielhaften Ausführungsform bilden der erste Seilspannabschnitt und der zweite Seilspannabschnitt Abschnitte eines gemeinsamen Seiles. Mit anderen Worten kann ein monolithisch und einstückig ausgebildetes Seil verwendet werden, welches von dem Vorderstangenabschnitt über die Fußstange zu dem Hinterstangenabschnitt geführt wird. Aufgrund des Ausschwenkens der Fußstange durch die Gewichtskraft des Benutzers wird dennoch das Seil von der Trägerstange weggedrückt und somit Gewichtskraft in das Seil eingeleitet.

Gemäß einer weiteren beispielhaften Ausführungsform liegt die Fußstange mit dem Fußabschnitt auf dem Seil gleitend auf. Dies bedeutet, dass keine Fixierung zwischen dem Seil und der Fußstange notwendig ist. Der Fußablagebereich der Fußstange kann somit entlang des Seils gleiten bzw. verschoben werden. Damit entfällt die Notwendigkeit einer exakten Längeneinstellung des ersten Seilspannabschnitts und des zweiten Seilspannabschnitts. Aufgrund der Belastung des Benutzers auf die Fußstange richtet sich diese im Wesentlichen entlang der Richtung der Gewichtskraft aus und drückt somit das Seil von der Trägerstange fort, sodass dadurch eine gleichmäßige Spannung des ersten Seilspannabschnitts und des zweiten Seilspannabschnitts generiert wird.

Gemäß einer weiteren beispielhaften Ausführungsform bilden der erste Seilspannabschnitt ein erstes Seil und der zweite Seilspannabschnitt ein, von dem ersten Seil getrenntes zweites Seil aus. Ein Ende des ersten Seils und ein Ende des zweiten Seils sind an dem Fußablagebereich fixiert.

Gemäß einer weiteren beispielhaften Ausführungsform sind an dem Fußabschnitt, insbesondere klappbare, Fußpedale zur Auflage von Füßen eines Benutzers angeordnet. Die Fußpedale können zudem beispielsweise eine aufgeraute Oberfläche aufweisen, um die Haftung eines Fußes eines Benutzers zu verbessern. Die Fußpedale können in dem Betriebszustand aufgeklappt werden und entsprechend eingeklappt werden.

Gemäß einer weiteren beispielhaften Ausführungsform ist zumindest eines der Fußpedale nach unten ausklappbar, um als Fahrradständer zu fungieren. Das Fußpedal kann beispielsweise in zwei Klapppositionen gegenüber der Fußstange einrasten. In einer ersten Rastposition ist das Fußpedal insbesondere rechtwinklig zu der Fußstange fixiert, um eine Auflage für einen Fuß des Benutzers darzustellen. In einer zweiten Rastposition ist das Fußpedal in einem Winkel zwischen 130° und 180° zu der Fußstange fixiert, um das Fahrrad auf dem Fußpedal abzustützen. In einer weiteren beispielhaften Ausführungsform ist das Fußpedal und/oder die Fußstange längenverstellbar, insbesondere aufgrund einer teleskopartig ein- und ausfahrbaren Ausbildung.

Gemäß einer weiteren beispielhaften Ausführungsform ist zumindest eines der Fußpedale um eine erste Schwenkachse schwenkbar an der Trägerstange derart angeordnet, dass es aus- und einklappbar ist, wobei zumindest eines der Fußpedale ferner um eine zweite Schwenkachse schwenkbar an die Fußstange angeordnet ist. Die zweite Schwenkachse ist insbesondere senkrecht zu der ersten Schwenkachse und insbesondere parallel zu einer Erstreckungsrichtung der Trägerstange ausgebildet. Mit anderen Worten ist eine Schwenkachse der Fußstange an der Trägerstange, beispielsweise an dem Mittelstangenabschnitt oder dem Hinterstangenabschnitt, nicht parallel bzw. weist einen Winkel auf zu einer Schwenkachse des weiteren Gelenks zwischen dem Mittelstangenabschnitt und dem Hinterstangenabschnitt bzw. des weiteren Gelenks zwischen dem Vorderstangenabschnitt und dem Hinterstangenabschnitt. Somit kann ebenfalls eine kompakte Bauform in einem eingeklappten Zustand erzielt werden.

Gemäß einer weiteren beispielhaften Ausführungsform ist das Fußpedal mit einer Gelenkhülse an einer weiteren Gelenkhülse um die erste Schwenkachse schwenkbar befestigt, wobei die weitere Gelenkhülse an einer Führungsbuchse oder einem Führungspin befestigt ist, der mit der Fußstange fest gekoppelt ist, wobei sich die Führungsbuchse insbesondere parallel zu der Fußstange erstreckt.

Gemäß einer weiteren beispielhaften Ausführungsform ist eine schräge Auflagefläche für das Fußpedal an der Fußstange ausgebildet, wobei die schräge Auflagefläche beabstandet von der Führungsbuchse angeordnet ist. Die Auflagefläche ist derart ausgebildet, dass das Fußpedal während dem Schwenken um die erste Schwenkachse und um die zweite Schwenkachse zumindest teilweise entlang der schrägen Auflagefläche aufliegt. Die schräge Auflagefläche ist ferner derart ausgebildet, dass in einer Betriebsposition das Fußpedal im Wesentlichen senkrecht zu der Fußstange vorliegt und während eines Bewegens des Fußpedals entlang der schrägen Auflagefläche und eines gleichzeitigen Schwenkens des Fußpedals um die zweite Drehachse das Fußpedal um die erste Schwenkachse schwenkt.

Gemäß einer weiteren beispielhaften Ausführungsform weist das Fahrrad einen Spannhebel zum Einstellen einer Seillänge des ersten Seilspannabschnitts und/oder des zweiten Seilspannabschnitts auf. Somit können im Betriebszustand die Seilspannabschnitte vorgespannt werden.

Gemäß einer weiteren beispielhaften Ausführungsform weist die Trägerstange zumindest ein weiteres Gelenk auf und zwischen dem Gelenk und dem weiteren Gelenk ist ein Mittelstangenabschnitt gebildet. Der Mittelstangenabschnitt verbindet somit den Vorderstangenabschnitt mit dem Hinterstangenabschnitt. An dem Mittelstangenabschnitt kann beispielsweise der Koppelabschnitt der Fußstange angeordnet werden. Aufgrund des Einführens des Mittelstangenabschnitts und der Klappmöglichkeit über das Gelenk und das weitere Gelenk, kann das Fahrrad kompakter eingeklappt und verstaut werden.

Gemäß einer weiteren beispielhaften Ausführungsform sind eine Schwenkachse des Gelenks und eine weitere Schwenkachse des weiteren Gelenks nicht parallel, insbesondere windschief, zueinander. Dies führt dazu, dass in einem eingeklappten Zustand der Vorderstangenabschnitt und der Hinterstangenabschnitt zusammen mit den entsprechenden Vorderrädern und Hinterrädern sich überdecken und somit ein kompakterer eingeklappter Zustand möglich ist.

Gemäß einer weiteren beispielhaften Ausführungsform ist zumindest der erste Seilspannabschnitt oder der zweite Seilspannabschnitt mittels einer Befestigungsöse ausgebildet, die um einen Befestigungspin verläuft, der an der Fußstange befestigt ist.

Gemäß einer weiteren beispielhaften Ausführungsform weist der Befestigungspin eine Zylinderform auf und die Befestigungsschraube verläuft parallel zu einer Längsachse des zylinderförmigen Befestigungspins, sodass eine Mantelfläche des zylinderförmigen Befestigungspins eine Anlagefläche für die Seilabschnitte des Seilspannabschnitts oder des zweiten Seilspannabschnitts bildet.

Gemäß einer weiteren beispielhaften Ausführungsform weist die Befestigungsschraube eine Schraubenachse auf, die parallel zu der Längsachse des zylinderförmigen Befestigungspins verläuft, wobei die Längsachse des zylinderförmigen Befestigungspins beabstandet zu der Schraubenachse der Befestigungsschraube ausgebildet ist.

Gemäß einer weiteren beispielhaften Ausführungsform ist an dem Vorderradbereich eine Lenkstange um eine Lenkachse schwenkbar angeordnet, an welcher ein Vorderrad befestigbar ist. Die Lenkstange kann dabei einklappbar an dem Vorderstangenabschnitt befestigt werden und entsprechend zwischen einem eingeklappten Zustand und dem Betriebszustand verschwenkt werden. Eine Spannvorrichtung, insbesondere eine Schnellspannvorrichtung, kann beispielsweise den Klappzustand der Lenkstange fixieren. Ferner kann die Lenkstange längenverstellbar ausgebildet sein.

Gemäß einer weiteren beispielhaften Ausführungsform ist an der Lenkstange zumindest eine Griffstange angeordnet, welche sich von der Lenkstange in einem Winkel von 45° bis 130°, insbesondere 90°, erstreckt. Die Griffstange weist beispielsweise einen Fahrradgriff auf, den der Benutzer greifen kann und somit die Lenkstange und entsprechend das Fahrrad steuern kann. An der Griffstange ist beispielsweise eine entsprechende Bremsvorrichtung aufweisend einen Bremshebel befestigt.

Gemäß einer weiteren beispielhaften Ausführungsform ist zwischen der Lenkstange und der Griffstange ein Lenkgelenk derart angeordnet, dass die Griffstange relativ zu der Lenkstange einklappbar ist und die Griffstange in eingeklappten Zustand parallel zur Lenkstange vorliegt.

Zusätzlich kann in einer beispielhaften Ausführungsform an dem Vorderradabschnitt oder dem Hinterradabschnitt ein Dämpfungssystem, z. B. mit einer gedämpften Fahrradgabel, integriert werden, welches das Vorderrad oder das Hinterrad dämpft. Zudem kann an der Lenkstange ein Dämpfungssystem installiert werden. Darüber hinaus kann an dem Vorderrad und/oder einem Hinterrad ein entsprechendes Bremssystem, z. B. mit Scheibenbremsen, installiert werden, welches von dem Fußabschnitt oder von der Griffstange aus gesteuert werden kann. Dies kann beispielsweise über Seilzugsysteme umgesetzt werden. Das Vorderrad und das Hinterradkönnen unterschiedliche Durchmesser (z. B. 14"(Zoll) Vorderrad, 12" Hinterrad) aufweisen. Ferner können auf der Hinterachse oder Vorderachse zwei oder mehr Räder angeordnet sein (z. B. Dreiradkonfiguration, dreispuriges Fahrrad).

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine schematische Darstellung einer Seitenansicht eines Fahrrads im Betriebszustand gemäß einer beispielhaften Ausführungsform der vorliegenden Erfindung.
Fig. 2 zeigt eine perspektivische Ansicht des Fahrrads aus Fig. 1 gemäß einer beispielhafte Ausführungsform der vorliegenden Erfindung.
Fig. 3 zeigt eine perspektivische Ansicht eines Fahrrads mit eingeklappten Fußpedalen und einer eingeklappten Griffstange gemäß einer beispielhaften Ausführungsform der vorliegenden Erfindung.
Fig. 4 bis Fig. 6 zeigen schematische Darstellung eines Fahrrads in eingeklappten Zustand gemäß einer beispielhaften Ausführungsform der vorliegenden Erfindung.
Fig. 7 und Fig. 8 zeigen eine beispielhafte Ausführungsform einer Gelenkverbindung zwischen Teilen der Trägerstange gemäß einer beispielhaften Ausführungsform der vorliegenden Erfindung.
Fig. 9 zeigt eine weitere beispielhafte Ausführungsform des Fahrrads mit einem dritten Spannseilabschnitt gemäß einer beispielhaften Ausführungsform der vorliegenden Erfindung.
Fig. 10 zeigt eine weitere beispielhafte Ausführungsform des Fahrrads mit einem dritten Spannseilabschnitt als Wegfahrsperre gemäß einer beispielhaften Ausführungsform der vorliegenden Erfindung.
Fig. 11 zeigt eine detaillierte Ansicht der Lagerung der Fußpedale an der Fußstange gemäß einer beispielhaften Ausführungsform der vorliegenden Erfindung.
Fig. 12 zeigt ein Spannsystem für das Fahrrad gemäß einer beispielhaften Ausführungsform.
Fig. 13 zeigt ein Spannsystem für das Fahrrad mit einem Exzentersystem gemäß einer beispielhaften Ausführungsform.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

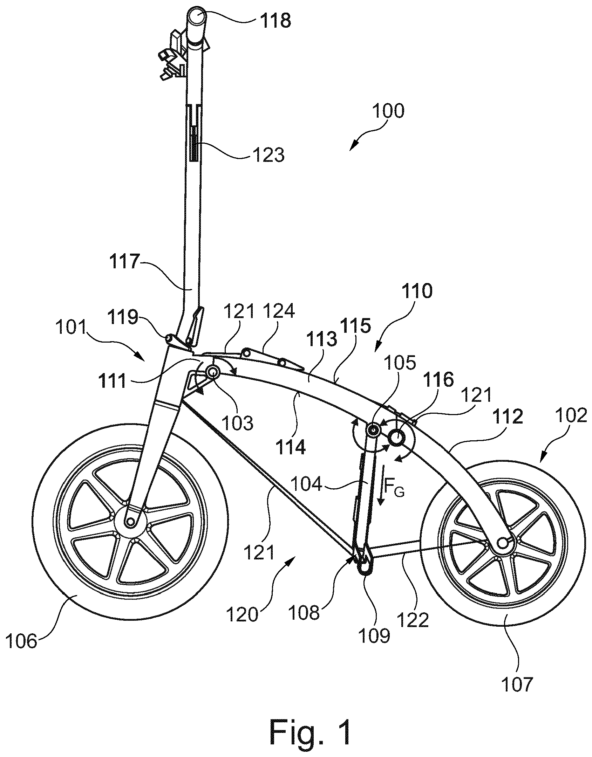

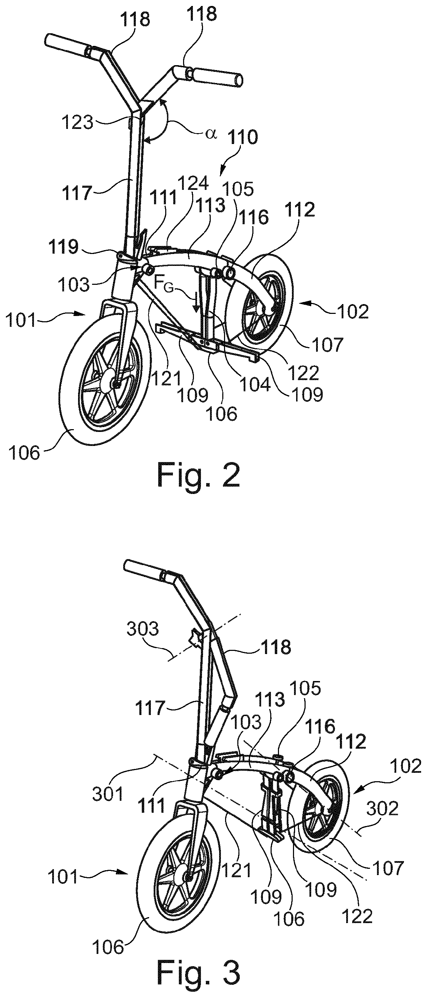

**Fig. 1** zeigt eine schematische Darstellung einer Seitenansicht eines Fahrrads 100 im Betriebszustand und **Fig. 2** zeigt eine perspektivische Ansicht des Fahrrads 100 aus Fig. 1.

Das gezeigte Fahrrad 100 ist insbesondere zum Bergabfahren ausgebildet. Das Fahrrad 100 weist einen Vorderradbereich 101, einen Hinterradbereich 102 und einer Trägerstange 110, welche den Vorderradbereich 101 und den Hinterradbereich 102 miteinander koppelt. Die Trägerstange 110 weist zum Aus- und Zusammenklappen zumindest ein Gelenk auf, wobei die Trägerstange 110 einen Vorderstangenabschnitt 111 zwischen dem Vorderradbereich 101 und dem Gelenk 103 und einen Hinterstangenabschnitt 112 zwischen dem Hinterradbereich 102 und dem Gelenk 103 aufweist. Eine Fußstange 104 ist mit einem Koppelabschnitt 105 schwenkbar an der Trägerstange 110 befestigt, wobei die Fußstange 104 an einem, dem Koppelabschnitt 105 gegenüberliegenden Fußabschnitt einen Fußablagebereich 108 aufweist zum Ablegen von Füßen eines Benutzers des Fahrrad 100 aufweist. Ein Spannseilsystem 120 weist einen ersten Seilspannabschnitt 121 und einen zweiten Seilspannabschnitt 122 auf, wobei der erste Seilspannabschnitt 121 an dem Fußabschnitt und dem Vorderstangenabschnitt 111 und der zweite Seilspannabschnitt 122 an dem Fußabschnitt und dem Hinterstangenabschnitt 112 derart gekoppelt sind, dass bei Ausübung einer Gewichtskraft auf den Fußabschnitt die Fußstange 104 in Gewichtskraftrichtung ausrichtbar ist und das Spannseilsystem 120 spannbar ist. In dem ausgeklappten Zustand, d. h. in einem Betriebszustand, kann der Benutzer sich auf das Fahrrad 100 stellen und Bergabfahren.

Das Gelenk 103 wird beispielsweise mittels eines Drehbolzens bereitgestellt, welcher entlang seiner Erstreckungsrichtung eine Schwenkachse 301 (siehe z. B. Fig. 3) für zumindest den Vorderstangenabschnitt 111 oder den Hinterstangenabschnitt 112 bildet. Zwischen dem Vorderstangenabschnitt 111 und dem Hinterstangenabschnitt 112 ist der Mittelstangenabschnitt 113 eingeführt.

Von der Trägerstange 110 erstreckt sich die Fußstange 104, welche mit einem Koppelabschnitt 105 schwenkbar an der Trägerstange 110, d. h. in dem Ausführungsbeispiel aus Fig. 1 beispielsweise an dem Mittelstangenabschnitt 113, befestigt ist. An dem, dem Koppelabschnitt 105 gegenüberliegenden Flussabschnitt ist ein Fußablagebereich 108 ausgebildet, auf welchen der Benutzer sich mit seinen Füßen beim Bergabfahren auf das Fahrrad 100 stellen kann.

Zur Stabilisierung der Trägerstange 110 in dem Betriebszustand, d. h. in dem aufgeklappten Zustand, wird das Spannseilsystem 120 vorgesehen. Ein erster Seilspannabschnitt 121 verläuft von dem Fußabschnitt der Fußstange 104 in Richtung Vorderstangenabschnitt 111 und ein zweiter Seilspannabschnitt 122 verläuft von dem Fußabschnitt zu dem Hinterstangenabschnitt 112. Die Fußstange 104 drückt den ersten Seilspannabschnitt 111 und den zweiten Seilspannabschnitt 112 an deren Kopplung mit dem Fußabschnitt von der Trägerstange 110 fort, sodass ein gespanntes und somit stabiles System zwischen der Trägerstange 110, der Fußstange 104und dem Spannseilsystem 120 hergestellt wird.

Die schwenkbare Fußstange 104 richtet sich aufgrund der Gewichtskraft FG in Richtung Schwerkraft aus und spannt damit automatisch den ersten Seilspannabschnitt 121 und den zweiten Seilspannabschnitt 122. Dies führt dazu, dass die Trägerstange 110 mit dem Vorderstangenabschnitt 111 und dem Hinterstangenabschnitt 112 während des Betriebs des Fahrrads 100, d. h. beispielsweise während des Bergabfahrens, in Betriebsposition, d. h. in dem aufgeklappten Zustand verharren.

Die Trägerstange 110 weist eine Bodenseite 114 und eine, zur Bodenseite 114 gegenüberliegende Oberseite 115 auf. Der Vorderradbereich 101 weist einen Befestigungsabschnitt für ein Vorderrad 106 und der Hinterradbereich 102 einen Befestigungsabschnitt für ein Hinterrad 107 auf, welche unterhalb der Bodenseite 114 angeordnet sind. Die Fußstange 104 erstreckt sich von der Bodenseite 114 der Trägerstange 110 in den unteren Bereich. Aufgrund der Auflage der Räder 106, 107 auf einem Boden werden in dem Vorderradbereich 101 und in dem Hinterradbereich 102 Auflagerkräfte eingeleitet, welche der Gewichtskraft Fg des Benutzers, die im Fußablagebereich 105 der Fußstange 104 eingeleitet werden, entgegenwirken. Durch die Gewichtskraft Fg des Benutzers, welcher über den Fußablagebereich 105 auf die Seilspannabschnitte 121, 122 übertragen werden, bleiben die Seilspannabschnitte 121, 122 sicher gespannt.

Der erste Seilspannabschnitt 121 führt in der beispielhaften Ausführungsform aus Fig. 1 von der Bodenseite 114 auf die gegenüberliegende Oberseite 115 der Trägerstange 110. Der erste Seilspannabschnitt 121 erstreckt sich entlang der Oberseite 115 über das Gelenk 103 derart, dass der erste Seilspannabschnitt 121 an dem Vorderstangenabschnitt 111 von der Bodenseite 114 auf die Oberseite 115 der Trägerstange 110 geführt ist und an dem Mittelstangenabschnitt 113 , welcher gegenüberliegend zum Vorderstangenabschnitt 111 am Gelenk 103 anliegt, auf der Oberseite 115 fixiert ist.

In der beispielhaften Ausführungsform aus Fig. 1 verläuft der erste Seilspannabschnitt 121 ferner entlang der Oberseite 115 über ein weiteres Gelenk 116, welches den Hinterstangenabschnitt 112 schwenkbar mit dem Mittelstangenabschnitt 113 gekoppelt. Wird der erste Seilspannabschnitt 121 aufgrund der Gewichtskraft Fg auf Zug belastet, so werden die Stangenabschnitte 111, 112, 113 in Betriebsposition fixiert.

Der Krafteinleitungspunkt der Gewichtskraft Fg des Benutzers, welche von dem Benutzer über den Fußablagebereich 108 auf den ersten Seilspannabschnitt 121 und den zweiten Seilspannabschnitt 122 übertragen wird, auf die Oberseite 115 der Trägerstange 110 gelegt. Somit bewirken die Seilkräfte, welche über die gelenküberführenden Seilspannabschnitte auf der Oberseite 115 der Trägerstange 110 eingeleitet werden, einen Moment um das Gelenk 103 bzw. weitere Gelenk 116, welches dieselbe Richtung aufweist, wie die Auflagerkräfte, die über die Räder 106, 107 induziert werden. Mit anderen Worten erzeugen die Auflagerkräfte und die Seilspannabschnitte 121, 122 ein gemeinsam gerichtetes Moment um das Gelenk 103, 116, welche die Trägerstange 110 bzw. die Stangenabschnitte 111, 112, 113 in den aufgeklappten Zustand, d. h. den Betriebszustand, drängt bzw. vorspannt.

Die Stangenabschnitte 111, 112, 113 definieren in einem ausgeklappten Zustand eine Betriebsposition des Fahrrads, wobei z.B. das Gelenk 103 derart ausgebildet ist, dass bei Vorliegen des Vorderstangenabschnitts 111 und des Mittelstangenabschnitt 113 in Betriebsposition eine Klappbewegung des Vorderstangenabschnitts 111 und des Mittelstangenabschnitts 113 in Richtung Unterseite bzw. Bodenseite 114 frei ist und eine Klappbewegung in Richtung Oberseite 115 gesperrt ist.

Das Gelenk 103 ist beispielsweise derart ausgebildet, dass von der Betriebsposition der Vorderstangenabschnitt 111 und der Mittelstangenabschnitt 113 um 90° geschwenkt werden können. Beispielsweise kann das Gelenk 103 derart ausgebildet sein, dass in Betriebsposition oberhalb des Gelenks 103 in Richtung Oberseite 115 die Stangenenden der Stangenabschnitte 111, 113 anliegen, sodass kein Schwenken der Stangenabschnitte 111, 113 aus der Betriebsposition in Richtung Oberseite 115 möglich ist. Wie in Fig. 1 dargestellt kann hierzu beispielsweise eine Drehbolzenlagerung des Gelenks 103 an der Unterseite der angrenzenden Stangenabschnitte 111, 113 ausgebildet sein, sodass ein Schwenken der Stangenabschnitte 111, 113 nur in Richtung deren Unterseite 104 aus der Betriebsposition möglich ist. Entsprechend dem Gelenk 103 kann das weitere Gelenk 116, welches den Mittelstangenabschnitt 113 und den Hinterstangenabschnitt 112 verbindet, ausgebildet sein.

Das Gelenk 103 und das weitere Gelenk 103 sind frei schwenkbar und frei von einer Arretiereinrichtung.

Erfindungsgemäß ist in Betriebsposition ein Schwenken des Vorderstangenabschnitts 111 und des Hinterstangenabschnitt 112 (bzw. des Mittelstangenabschnitt 113) in Richtung Oberseite 115 aufgrund der Ausbildung des Gelenks 103, 116 und der Stangenabschnitte 111, 112, 113 gesperrt. Ein Schwenken des Vorderstangenabschnitts 111 und des Hinterstangenabschnitt 112 (bzw. des Mittelstangenabschnitt 113) in Richtung Bodenseite 114 wird durch die Auflagerkräfte der Räder 106, 107 und zudem durch die Seilkräfte der Seilspannabschnitte 121, 122, die durch die Gewichtskraft Fg des Benutzers erzeugt werden, verhindert.

Der erste Seilspannabschnitt 121 und der zweite Seilspannabschnitt 122 bilden Abschnitte eines gemeinsamen Seiles. Aufgrund des Ausschwenkens der Fußstange 104 durch die Gewichtskraft des Benutzers wird dennoch das Seil von der Trägerstange weggedrückt und somit Gewichtskraft in das Seil eingeleitet. Die Fußstange 104 mit dem Fußabschnitt auf dem Seil gleitend auf. Dies bedeutet, dass keine Fixierung zwischen dem Seil und der Fußstange 104 notwendig ist. Der Fußablagebereich 108 der Fußstange 104 kann somit entlang des Seils gleiten bzw. verschoben werden. Aufgrund der Belastung des Benutzers auf die Fußstange 104 richtet sich diese im Wesentlichen entlang der Richtung der Gewichtskraft Fg aus und drückt somit das Seil von der Trägerstange 110 fort, sodass dadurch eine gleichmäßige Spannung des ersten Seilspannabschnitts 121 und des zweiten Seilspannabschnitts 122 generiert wird.

An dem Fußabschnitt sind, insbesondere klappbare, Fußpedale 109 zur Auflage von Füßen eines Benutzers angeordnet. Die Fußpedale 109 können zudem beispielsweise eine aufgeraute Oberfläche aufweisen, um die Haftung eines Fußes eines Benutzers zu verbessern. Die Fußpedale 109 können in dem Betriebszustand aufgeklappt werden und entsprechend eingeklappt werden.

Das Fahrrad weist einen Spannhebel 124 zum Einstellen einer Seillänge des ersten Seilspannabschnitts 121 und/oder des zweiten Seilspannabschnitts 122 auf. Somit können im Betriebszustand die Seilspannabschnitte 121, 122 vorgespannt werden.

An dem Vorderradbereich 101 ist eine Lenkstange 117 um eine Lenkachse schwenkbar angeordnet ist, an welcher ein Vorderrad 106 befestigbar ist. Die Lenkstange 117 kann dabei um ein Lenkstangengelenk 119 einklappbar an dem Vorderstangenabschnitt 111 befestigt werden und entsprechend zwischen einem eingeklappten Zustand und dem Betriebszustand verschwenkt werden. Eine Spannvorrichtung, insbesondere eine Schnellspannvorrichtung, kann beispielsweise den Klappzustand der Lenkstange 117 fixieren. Ferner kann die Lenkstange 117 längenverstellbar ausgebildet sein.

An der Lenkstange 117 ist zumindest eine Griffstange 118 angeordnet, welche sich von der Lenkstange 117 in einem Winkel α von ca. 130° erstreckt. Die Griffstange 118 weist beispielsweise einen Fahrradgriff auf, den der Benutzer greifen kann und somit die Lenkstange 117 und entsprechend das Fahrrad 100 steuern kann. An der Griffstange 118 ist beispielsweise eine entsprechende Bremsvorrichtung aufweisend einen Bremshebel befestigt.

**Fig. 3** zeigt eine perspektivische Ansicht eines Fahrrads 100 mit eingeklappten Fußpedalen 109 und einer eingeklappten Griffstange 118 gemäß einer beispielhaften Ausführungsform der vorliegenden Erfindung.

Die Fußstange 104 ist z.B. am weiteren Gelenk 116 befestigt. Beispielsweise kann das Gelenk 116 eine massive Grundplatte aufweisen, die zudem eine schwenkbare Fixierung der Fußstange 104 zulässt.

Die Fußpedale 109 sind einklappbar an der Fußstange 104 befestigt. Ferner ist zumindest ein Fußpedal 109 nach unten ausklappbar, um als Fahrradständer zu fungieren. Das Fußpedal 109 kann beispielsweise in zwei Klapppositionen gegenüber der Fußstange 104 einrasten. In einer ersten Rastposition ist das Fußpedal 109 insbesondere rechtwinklig zu der Fußstange 104 fixiert, um eine Auflage für einen Fuß des Benutzers darzustellen. In einer zweiten Rastposition ist das Fußpedal 109 in einem Winkel zwischen 130° und 180° zu der Fußstange 104 fixiert, um das Fahrrad 100 auf dem Fußpedal 109 abzustützen.

In Fig. 3 wird dargestellt, dass eine Schwenkachse 301 des Gelenks 103 und eine weitere Schwenkachse 302 des weiteren Gelenks 116 nicht parallel, insbesondere windschief, zueinander sind. Dies führt dazu, dass in einem eingeklappten Zustand der Vorderstangenabschnitt 111 und der Hinterstangenabschnitt 112 zusammen mit den entsprechenden Vorderrädern 106 und Hinterrädern 107 sich überdecken und somit ein kompakterer eingeklappter Zustand möglich ist.

Zwischen der Lenkstange 117 und der Griffstange 118 ist ein Lenkgelenk 123 derart angeordnet, dass die Griffstange 118 relativ zu der Lenkstange 117 um eine weitere Schwenkachse 303 einklappbar ist und die Griffstange 118 in eingeklappten Zustand parallel zur Lenkstange 117 vorliegt.

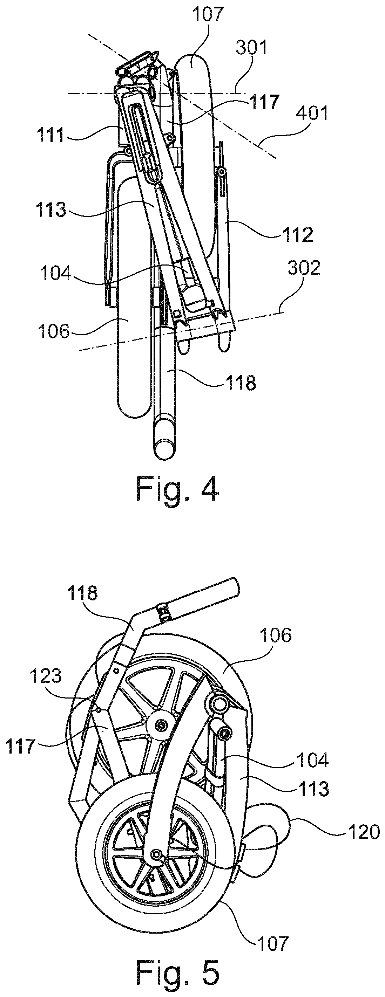

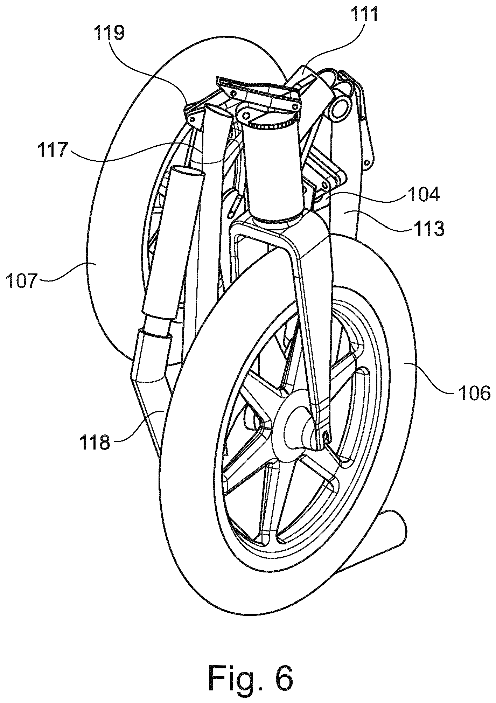

**Fig. 4** bis **Fig. 6** zeigen schematische Darstellung eines Fahrrads 100 in eingeklappten Zustand gemäß einer beispielhaften Ausführungsform der vorliegenden Erfindung.

Die Schwenkachse 301 des Gelenks 103 und die weitere Schwenkachse 302 des weiteren Gelenks 116 sind dabei nicht parallel, insbesondere windschief, zueinander sind. Dies führt wie in Fig. 4 dargestellt dazu, dass in einem eingeklappten Zustand der Vorderstangenabschnitt 111 und der Hinterstangenabschnitt 112 zusammen mit den entsprechenden Vorderrädern 106 und Hinterrädern 107 sich überdecken und somit ein kompakterer eingeklappter Zustand möglich ist.

An dem Vorderradbereich 101 ist die Lenkstange 117 um eine Lenkachse schwenkbar angeordnet ist, an welcher ein Vorderrad 106 befestigbar ist. Die Lenkstange 117 ist dabei um ein Lenkstangengelenk 119 um die Schwenkachse 401 einklappbar an dem Vorderstangenabschnitt 111 befestigt werden und entsprechend zwischen einem eingeklappten Zustand und dem Betriebszustand verschwenkt werden. Die Schwenkachse 401 ist dabei ebenfalls nicht parallel zu den anderen Schwenkachsen 301, 302 und 303, um ein kompaktes Einklappen des Fahrrads 100 zu ermöglichen.

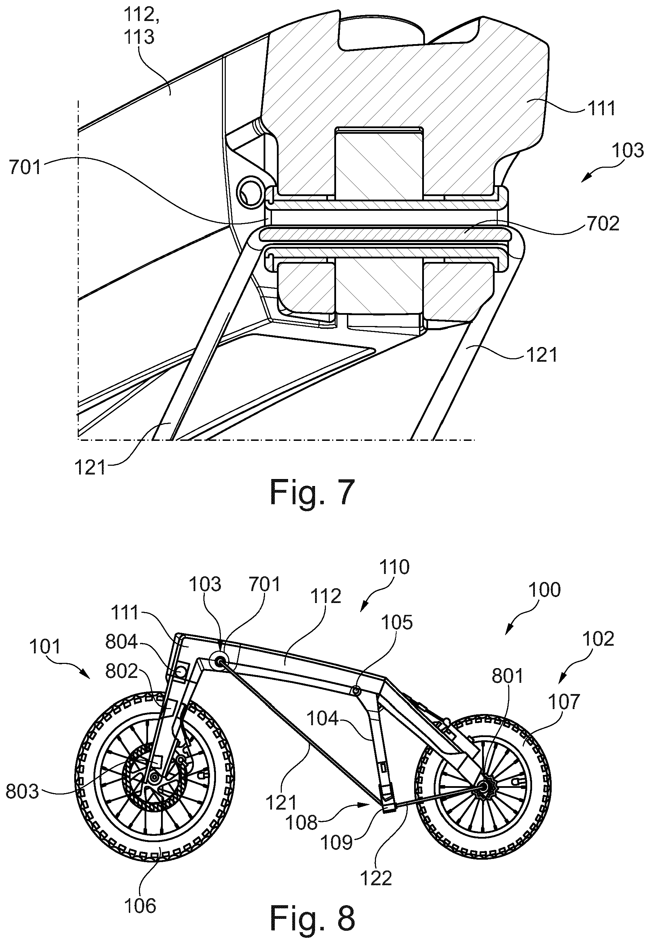

**Fig. 7** und **Fig. 8** zeigen eine beispielhafte Ausführungsform einer Gelenkverbindung zwischen Teilen der Trägerstange 110. In Fig. 7 ist beispielsweise das Gelenk 103 dargestellt, welches den Vorderstangenabschnitt 111 mit dem Mittelstangenabschnitt 113 oder dem Hinterstangenabschnitt 112 verbindet.

Das Gelenk ist als Lagerhülse bzw. als Hohlachse 701 ausgebildet. Beispielsweise kann die Lagerhülse 701 drehbar an dem Vorderstangenabschnitt 111 befestigt sein. Der Vorderstangenabschnitt 111 kann am Gelenk 103 eine Gabelform aufweisen und die Lagerhülse 701 teilweise umschließen oder eine entsprechende Öffnung aufweisen und die Lagerhülse 701 vollständig umschließen. Ferner ist an der Lagerhülse 701 der weitere Verbindungspartner, wie beispielsweise der Mittelstangenabschnitt 113 oder der Hinterstangenabschnitt 112 gekoppelt. Der erste Seilspannabschnitt 121 bildet zwei nebeneinander verlaufende Seilabschnitte aus, wobei ein Verbindungabschnitt 702 der zwei Seilabschnitte durch die Lagerhülse 701 verläuft. Somit kann das Spannseilabschnitt 121 von der Fußstange 104 durch die Lagerhülse 701 und entsprechend durch den Vorderstangenabschnitt 111 geführt werden und auf der gegenüberliegenden Seite zurück an die Fußstange 104 geführt werden.

Entsprechend dem vorderen Gelenk 103 kann ferner das weitere Gelenk 116 mit einer Lagerhülse 701 ausgebildet werden.

Ferner kann eine weitere Lagerhülse 801 am Ende des Hinterstangenabschnitts 112 vorgesehen werden, an welchem das Hinterrad 107 drehbar befestigt ist. So kann beispielsweise die Lagerhülse 801 das Hinterrad 107 drehbar an den Hinterstangenabschnitt 112 befestigen. Die weitere Lagerhülse 801 ist dabei beispielsweise drehfest an dem Hinterstangenabschnitt 112 befestigt, wobei sich das Hinterrad 107 um die weitere Lagerhülse 801 drehen kann. Entsprechend kann der zweite Seilspannabschnitt 122 durch die weitere Lagerhülse 801 verlaufen oder in der weiteren Lagerhülse 801 befestigt werden.

Ferner kann das Fahrrad 100 eine Antriebseinheit 802, 803, welche insbesondere batteriebetrieben ist, aufweisen. So kann beispielsweise in der Trägerstange 110, bzw. in dem Vorderstangenabschnitt 111, dem Hinterstangenabschnitt 112 und/oder dem Mittelstangenabschnitt 113, eine Batterie 804 bzw. ein Akkupaket angeordnet sein. Eine Antriebseinheit 803, beispielsweise ein Radnabenmotor, kann beispielsweise in dem Vorderrad 106 und/oder in dem Hinterrad 107 angeordnet werden, um diese anzutreiben. Dabei ist die Antriebseinheit 803 mit der Batterie 804 elektrisch gekoppelt. Ferner kann eine Antriebseinheit 802 an der Trägerstange 110 im Bereich einer Mantelfläche des Vorderrads 106 und/oder des Hinterrads 107 angeordnet werden, um eine kraftübertragende Kopplung mit der Mantelfläche zu generieren und entsprechend eine Antriebskraft zu übertragen. Die Antriebseinheit 802, 803 kann beispielsweise durch ein entsprechendes Bedienungselement im Griffbereich des Benutzers, d. h. in der Griffstange 118 oder der Lenkstange 117, gesteuert werden.

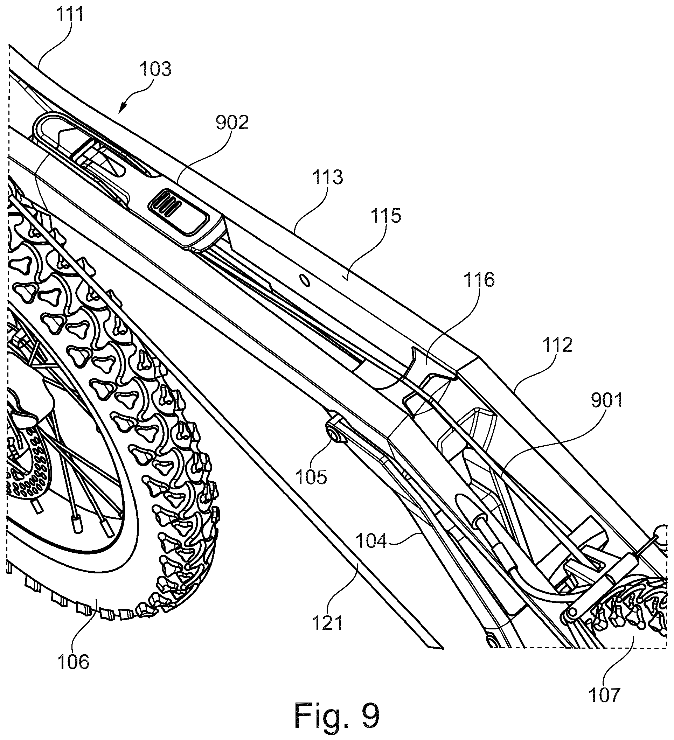

**Fig. 9** zeigt eine weitere beispielhafte Ausführungsform des Fahrrads 110. Das Fahrrad 110 weist den Vorderstangenabschnitt 111, den Mittelstangenabschnitt 113 sowie den Hinterstangenabschnitt 112 auf. Der Vorderstangenabschnitt 111 ist mit dem Gelenk 103 mit den Mittelstangenabschnitt 113 gekoppelt. Der Mittelstangenabschnitt 113 ist mit dem weiteren Gelenk 116 mit dem Hinterstangenabschnitt 112 gekoppelt. Im Bereich der Oberseite 115 wird ein dritter Spannseilabschnitt 901 dargestellt. Der dritte Spannseilabschnitt 901 ist zumindest an zwei, an einem Gelenk 103, 116 benachbarten Stangenabschnitten 111, 112, 113 gekoppelt. Beispielsweise ist der dritte Spannseilabschnitt 901 an den Vorderstangenabschnitt 111 und den Mittelstangenabschnitt 113 fixiert und verläuft über das Gelenk 103. Alternativ kann der dritte Spannseilabschnitt 901 an den Mittelstangenabschnitt 113 und dem Hinterstangenabschnitt 112 fixiert werden und verläuft über das Gelenk 116. In der dargestellten Ausführungsform wird der dritte Spannseilabschnitt 901 an den Vorderstangenabschnitt 111 fixiert und verläuft über den Mittelstangenabschnitt 113 zu dem Hinterstangenabschnitt 112 und wird dort fixiert. Insbesondere verläuft der dritte Spannseilabschnitt 901 entlang der Oberseite 115, d. h. an einer gegenüberliegenden Seite bezüglich der Gelenke 103, 116 im Vergleich zu den ersten und zweiten Seilspannabschnitt dann 121, 122, die im Bereich der Bodenseite 114 verlaufen. Der dritte Spannseilabschnitt 901 erzeugt durch Spannung somit ein Drehmoment um das Gelenk 103 und/oder das weitere Gelenk 116 entgegen dem Drehmoment, welches durch den ersten Spannseilabschnitt 121 und den zweiten Spannseilabschnitt 123 erzeugt wird.

Mit dem dritten Seilspannabschnitt 901 wird somit eine weitere Stabilisierung der Betriebsposition des Fahrrads 100 geschaffen.

Ferner kann der dritte Spannseilabschnitt 901 mittels eines Schnellspanners 902 an einem Stangenabschnitt 111, 112, 113 fixiert werden. In dem gezeigten Ausführungsbeispiel wird der dritte Seilspannabschnitt 901 mit dem Schnellspanner 902 an dem Mittelstangenabschnitt 113 lösbar befestigt. Der Schnellspanner ist gleichzeitig neben einer Kopplung an den Mittelstangenabschnitt 113 an dem Vorderstangenabschnitt 111 Koppelbar. Der Schnellspanner 902 zieht somit einerseits den Vorderstangenabschnitt 111 in Richtung Mittelstangenabschnitt 113 und spannt gleichzeitig den dritten Seilspannabschnitt 901, wenn der Schnellspanner 902 in eine Schließposition (siehe Fig. 9) gestellt wird.

Mit dem Schnellspanner 902 kann beispielsweise ein Zusammenklappen des Fahrrads 110 initiiert werden, indem mittels des Schnellspanners 901 das Gelenk 103 zwischen dem Vorderstangenabschnitt 111 und dem Mittelstangenabschnitt 113 freigegeben wird und gleichzeitig die Spannung des Spannseilabschnitt 901 zwischen dem Mittelstangenabschnitt 113 und dem Hinterstangenabschnitt 112 gelöst wird und somit eine Drehung der beiden Stangenabschnitte 112, 113 um das weitere Gelenk 116 ermöglicht wird.

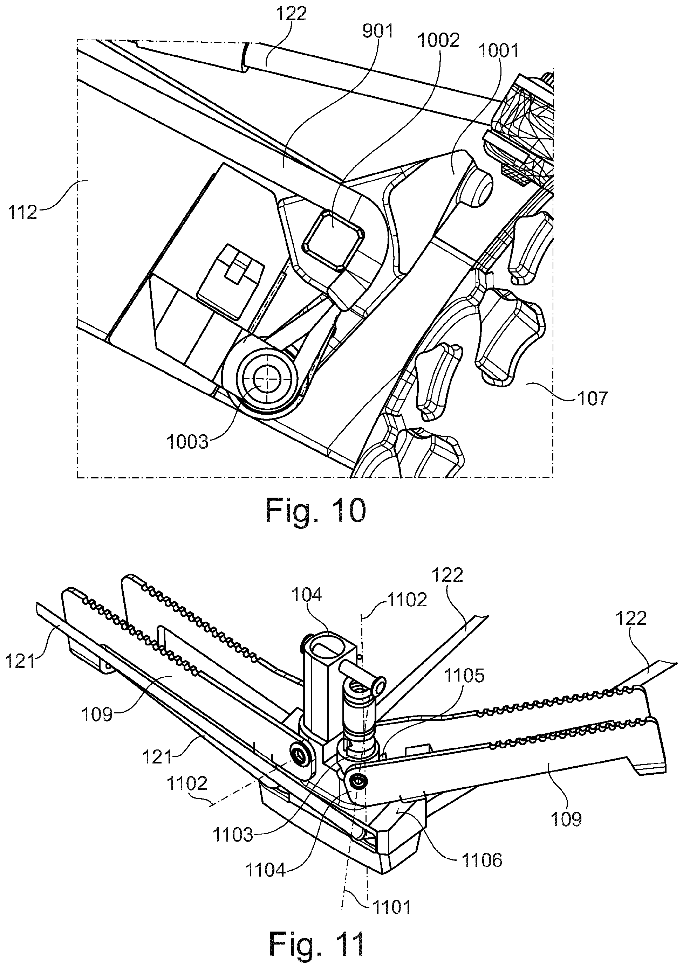

**Fig. 10** zeigt eine weitere beispielhafte Ausführungsform des Fahrrads 110 mit dem dritten Seilspannabschnitt 901. An dem Hinterstangenabschnitt 112 ist ein Bremshebel 1001 über einen Sicherungsbolzen 1003 schwenkbar befestigt. Der Bremshebel 1001 ist derart schwenkbar, dass dieser in Richtung Hinterrad 107 schwenken kann und in einer Sperrposition mit dem Hinterrad 107 derart gekoppelt werden kann, dass eine weitere Drehung des Hinterrads 107 verhindert bzw. gebremst wird. Der Bremshebel 1001 ist dabei in Richtung Sperrposition zur Sperrung des Hinterrads 107 vorgespannt, beispielsweise mittels eines Federsystems.

Der Bremshebel 1001 kann in Sperrposition in ein Reifenprofil des Hinterrads 107 eingreifen. Ferner kann mit dem Bremshebel 1001 auch ein Bremssystem bzw. eine Kopplung an eine Bremsscheibe vorgesehen werden.

Der dritte Spannseilabschnitt 901 ist ferner an dem Bremshebel 1001 fixiert. Dabei ist der Spannseilabschnitt 901 derart an dem Bremshebel 1001 fixiert, dass bei Zug des dritten Spannseilabschnitts 901 der Bremshebel 1001 aus der Sperrposition in eine Freigabeposition entgegen der Vorspannkraft verstellbar ist. In dieser Freigabeposition kann das Hinterrad 107 frei rotieren. Dabei kann der dritte Seilspannabschnitt 901 beispielsweise um den Drehbolzen 1002 geführt werden und an einem Sicherungsbolzen 1003 mit dem Bremshebel 1001 gekoppelt sein.

Wird nun der dritte Seilspannabschnitt 901 gespannt, beispielsweise mittels des Schnellspanners 902, sodass sichergestellt ist, dass sich das Fahrrad 100 in einer Betriebsposition befindet, wird eine Rotation des Hinterrads 107 ermöglicht bzw. eine Sperrung aufgehoben. Befindet sich der dritte Seilspannabschnitt 901 nicht unter Spannung und das Fahrrad 100 somit nicht in Betriebsposition, so wird eine Rotation des Hinterrads 107 verhindert, sodass eine Bewegung des Fahrrads 110 unterbunden wird. Somit wird beispielsweise eine Wegfahrsperre ermöglicht, sodass der Benutzer erst das Fahrrad 110 bewegen kann, wenn eine sichere Betriebsposition des Fahrrads 110 eingestellt ist.

Zusammenfassend wird der dritte Spannseilabschnitt 901 (welche insbesondere separat zu dem ersten Spannseilabschnitt 121 und dem zweiten Spannseilabschnitt 122 ausgebildet werden kann) von dem Schnellspanner 902 gespannt, sodass ein Zusammenklappen des Rahmens bzw. des Trägerstangensystems 110 während der Fahrt verhindert wird und es wird gleichzeitig die Wegfahrsperre gelöst.

**Fig. 11** zeigt eine detaillierte Ansicht der Lagerung der Fußpedale 109 an der Fußstange 104. Die Fußpedale 109 sind dabei um eine erste Schwenkachse 1101 schwenkbar an der Trägerstange 104 angeordnet, sodass diese aus und einklappbar sind. Die erste Schwenkachse 1101 verläuft dabei im Wesentlichen innerhalb einer horizontalen Ebene, wenn das Fahrrad 110 auf dem Boden aufsteht, sodass die Fußpedale 109 in Richtung Boden aus- und einklappbar sind. So können beispielsweise die Fußpedale 109 platzsparend nach oben eingeklappt werden. Zudem können die Fußpedale 109 in einer Betriebsposition befestigt bzw. verrastet werden, um zur Auflage von Füßen eines Benutzers während des Betriebs des Fahrrads 100 zu dienen. Außerdem können die Fußpedale 109 weiter nach unten ausklappbar sein, um als Fahrradständer zu fungieren.

Ferner können die Fußpedale 109 um eine zweite Schwenkachse 1102 drehbar bzw. schwenkbar an die Fußstange 104 gekoppelt werden. Die zweite Schwenkachse 1102 ist insbesondere senkrecht zu der ersten Schwenkachse 1101 und verläuft beispielsweise parallel zu der Erstreckungsrichtung der Trägerstange 104 bzw. innerhalb einer vertikalen Ebene, wenn das Fahrrad 110 auf dem Boden aufsteht. Beispielsweise kann ein Fußpedal 109 mit einem Drehpin bzw. einer Gelenkhülse 1104 an einer weiteren Gelenkhülse 1105 insbesondere um die erste Schwenkachse 1101 schwenkbar befestigt sein. Die weitere Gelenkhülse 1105 ist wiederum beispielsweise an eine Führungsbuchse 1103 befestigt, die mit der Fußstange 104 fest gekoppelt ist. Die Führungsbuchse 1103 erstreckt sich dabei parallel zu der Fußstange 104 und insbesondere entlang der ersten Schwenkachse 1101. Somit kann die weitere Gelenkhülse 1105 die Fußpedale 109 um die zweite Schwenkachse 1102 schwenken.

Die Fußpedale 109 können somit in Richtung Vorderrad 106 oder in Richtung Hinterrad 107 verschwenkt werden. Somit kann eine Schutzwirkung erzielt werden, da bei einer Kollision mit einem Hindernis eines Fußpedal 109 während des Betriebs des Fahrrads 100 das Fußpedal 109 zum Beispiel nach hinten wegklappen und nachgeben kann.

Beispielsweise kann eine schräge Auflagefläche 1106 vorgesehen werden, welche beabstandet von der Führungsbuchse 1103 angeordnet ist. Die Auflagefläche 1106 ist derart ausgebildet, dass das Fußpedal 109 während dem Schwenken um die erste Schwenkachse 1101 und die zweite Schwenkachse 1102 zumindest teilweise entlang der schrägen Auflagefläche 1106 aufliegt. Die schräge Auflagefläche 1106 ist dabei derart ausgebildet, dass in einer Betriebsposition das Fußpedal 109 beispielsweise eine horizontale Orientierung aufweist und im Wesentlichen senkrecht zu der Fußstange 104 vorliegt. Ferner ist die schräge Auflagefläche 1106 derart ausgebildet, dass während eines Schwenkens des Fußpedals 109 um die zweite Drehachse 1102 das Fußpedal 109 um die erste Schwenkachse 1101 geschwenkt wird und somit beispielsweise nach oben zur Fußstange 104 hin geschwenkt werden kann.

Durch die schräge Rampe bzw. schräge Auflagefläche 109 wird ferner durch die Gewichtskraft des Benutzers automatisch eine vordere Neutralposition bzw. Betriebsposition eingenommen, sodass das Fußpedal 109 in wesentlichen senkrecht zu der Fußstange 104 vorliegt. Um das Fußpedal 109 in die Neutralposition zu zwingen, kann ferner eine Drehfeder vorgesehen werden, welche auch ohne Gewichtskraft des Benutzers das Fußpedal 109 in Richtung Neutralposition drückt.

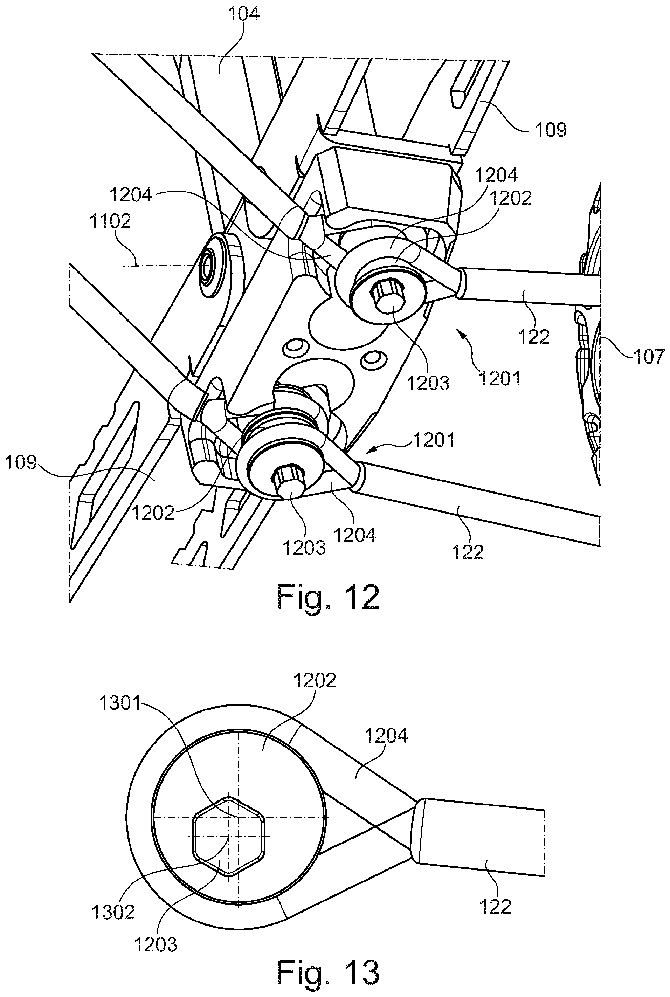

**Fig. 12** zeigt ein Spannsystem 1201 für das Fahrrad 100 gemäß einer beispielhaften Ausführungsform. An einem Boden bzw. einem unteren Ende der Fußstange 104 sind beispielsweise der erste Seilspannabschnitt 121 und der zweite Seilspannabschnitt 122 befestigt. Die Spannseilabschnitt der 121, 122 weisen dabei beispielsweise Befestigungsösen 1204 auf, die um einen Befestigungspin 1202 verlaufen. Der Befestigungspin 1202 ist mit einer Befestigungsschraube 1203 befestigt. Dabei können beispielsweise der erste Seilspannabschnitt 121 mit jeweils zwei parallelen Seilabschnitten ausgebildet werden und der zweite Seilspannabschnitt 122 ebenfalls mit jeweils zwei parallelen Seilabschnitten ausgebildet werden. An dem Befestigungspin 1202 ist beispielsweise jeweils ein Seilabschnitt des ersten Seilspannabschnitt 121 und des zweiten Seilspannabschnitt 122 befestigt. Alternativ können beispielsweise alle Seilabschnitte an einem Befestigungspin 1202 befestigt werden. Alternativ kann für jeden Seilabschnitt ein separater Befestigungspin 1202 vorgesehen werden.

Wie in **Fig. 13** dargestellt, kann der Befestigungspin 1202 beispielsweise eine Zylinderform aufweisen, wobei die Befestigungsschraube 1203 parallel zu der Längsachse 1301 der Zylinderform verläuft. Somit bildet die runde Mantelfläche des zylinderförmigen Befestigungspins 1202 eine Anlagefläche für die Seilabschnitte. Insbesondere kann die Befestigungsschraube 1203 eine Schraubenachse 1302 aufweisen, die parallel zu der Längsachse 1301 des zylinderförmigen Befestigungspins 1202 verläuft. Ferner kann das Spannsystem 1201 derart ausgebildet sein, dass die Längsachse 1301 des zylinderförmigen Befestigungspins 1202 beabstandet zu der Schraubenachse 1302 der Befestigungsschraube 1203 vorliegt. Somit wird ein Exzentersystem geschaffen, womit bei Drehung des zylinderförmigen Befestigungspins 1202 um die Schraubenachse 1302 eine Spannung bzw. Lockerung der daran befestigten Seilabschnitte generiert wird. Somit kann eine Feinjustage der Seilspannungen bzw. der ersten und zweiten Seilspannabschnitte 121, 122 erzielt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können, sofern sie in den Anwendungsbereich der beigefügten Ansprüche fallen. Bezugszeichen in den Ansprüchen sind nicht als Einschränkung anzusehen.

### Bezugszeichenliste:

| | | | |
|---|---|---|---|
| 100 | Fahrrad | 401 | Schwenkachse Lenkstangengelenk |
| 101 | Vorderradbereich | | |
| 102 | Hinterradbereich | 701 | Lagerhülse |
| 103 | Gelenk | 702 | Verbindungabschnitt |
| 104 | Fußstange | 801 | weitere Lagerhülse |
| 105 | Koppelabschnitt | 802 | Antriebseinheit |
| 106 | Vorderrad | 803 | weitere Antriebseinheit |
| 107 | Hinterrad | 804 | Batterie, Akkupaket |
| 108 | Fußablagebereich | 901 | dritter Seilspannabschnitt |
| 109 | Fußpedal | 902 | Schnellspanner |
| 110 | Trägerstange | 1001 | Bremshebel |
| 111 | Vorderstangenabschnitt | 1002 | Drehbolzen |
| 112 | Hinterstangenabschnitt | 1003 | Sicherungsbolzen |
| 113 | Mittelstangenabschnitt | 1101 | erste Schwenkachse |
| 114 | Bodenseite | 1102 | zweite Schwenkachse |
| 115 | Oberseite | 1103 | Führungsbuchse |
| 116 | weiteres Gelenk | 1104 | Gelenkhülse |
| 117 | Lenkstange | 1105 | weitere Gelenkhülse |
| 118 | Griffstange | 1106 | schräge Auflagefläche |
| 119 | Lenkstangengelenk | 1201 | Spannsystem |
| 120 | Spannseilsystem | 1202 | Befestigungspin |
| 121 | erster Seilspannabschnitt | 1203 | Befestigungsschraube |
| 122 | zweiter Seilspannabschnitt | 1204 | Befestigungsöse |
| 123 | Lenkgelenk | 1301 | Längsachse |
| 124 | Spannhebel | 1302 | Schraubenachse |
| 301 | Schwenkachse Gelenk | | |
| 302 | Schwenkachse weiteres Gelenk | Fg | Gewichtskraft |
| 303 | Schwenkachse Lenkgelenk | | |

## Patentansprüche

1. Fahrrad (100) zum Bergabfahren, das Fahrrad (100) aufweisend
einen Vorderradbereich (101),
einen Hinterradbereich (102),
eine Trägerstange (110), welche den Vorderradbereich (101) und den Hinterradbereich (102) miteinander koppelt,
wobei die Trägerstange (110) zum Aus- und Zusammenklappen der Trägerstange (110) zumindest ein Gelenk (103) aufweist,
wobei die Trägerstange (110) einen Vorderstangenabschnitt (111) zwischen dem Vorderradbereich (101) und dem Gelenk (103) und einen Hinterstangenabschnitt (112) zwischen dem Hinterradbereich (102) und dem Gelenk (103) aufweist,
eine Fußstange (104), welche mit einem Koppelabschnitt (105) der Fußstange (104) an der Trägerstange (110) befestigt ist, wobei die Fußstange (104) an einem, dem Koppelabschnitt (105) gegenüberliegenden Fußabschnitt der Fußstange (104) einen Fußablagebereich (108) zum Ablegen von Füßen eines Benutzers des Fahrrads (100) aufweist,
ein Spannseilsystem (120) mit einem ersten Seilspannabschnitt (121) und einem zweiten Seilspannabschnitt (122),
**dadurch gekennzeichnet, dass**
die Fußstange (104) mit dem Koppelabschnitt (105) der Fußstange (104) schwenkbar an der Trägerstange (110) befestigt ist, und
der erste Seilspannabschnitt (121) an dem Fußabschnitt und dem Vorderstangenabschnitt (111) und der zweite Seilspannabschnitt (122) an dem Fußabschnitt und dem Hinterstangenabschnitt (112) derart gekoppelt sind, dass bei Ausübung einer Gewichtskraft auf den Fußabschnitt die Fußstange (104) in Gewichtskraftrichtung ausrichtbar ist und das Spannseilsystem (120) spannbar ist.

2. Fahrrad (100) gemäß Anspruch 1,
wobei die Trägerstange (110) eine Bodenseite (114) und eine, zur Bodenseite (114) gegenüberliegende Oberseite (115) aufweist,
wobei der Vorderradbereich (101) einen Befestigungsabschnitt für ein Vorderrad (106) und der Hinterradbereich (102) einen Befestigungsabschnitt für ein Hinterrad (107) aufweisen, welche in einem unteren Bereich der Bodenseite (114) angeordnet sind,
wobei die Fußstange (104) sich von der Bodenseite (114) der Trägerstange (110) in den unteren Bereich erstreckt.

3. Fahrrad (100) gemäß Anspruch 2,
wobei sich der erste Seilspannabschnitt (121) und/oder der zweite Seilspannabschnitt (122) von der Bodenseite (114) auf eine gegenüberliegende Oberseite (115) der Trägerstange (110) führbar ist und auf der Oberseite (115), insbesondere lösbar, befestigt ist.

4. Fahrrad (100) gemäß Anspruch 3,
wobei sich der erste Seilspannabschnitt (121) entlang der Oberseite (115) über das Gelenk (103) derart erstreckt, dass der erste Seilspannabschnitt (121) an dem Vorderstangenabschnitt (111) von der Bodenseite (114) auf die Oberseite (115) der Trägerstange (110) geführt ist und an dem Trägerstangenabschnitt, welcher gegenüberliegend zum Vorderstangenabschnitt (111) am Gelenk (103) anliegt, auf der Oberseite (115) fixiert ist, und/oder
wobei sich der zweite Seilspannabschnitt (122) entlang der Oberseite (115) über das Gelenk (103) derart erstreckt, dass der zweite Seilspannabschnitt (122) an dem Hinterstangenabschnitt (112) von der Bodenseite (114) auf die Oberseite (115) der Trägerstange (110) geführt ist und an dem Trägerstangenabschnitt, welcher gegenüberliegend zum Hinterstangenabschnitt (112) am Gelenk (103) anliegt, auf der Oberseite (115) fixiert ist.

5. Fahrrad (100) gemäß einem der Ansprüche 2 bis 4,
wobei der Vorderstangenabschnitt (111) und der Hinterstangenabschnitt (112) in einem ausgeklappten Zustand eine Betriebsposition des Fahrrads (100) definieren,
wobei das Gelenk (103) derart ausgebildet ist, dass bei Vorliegen des Vorderstangenabschnitts (111) und des Hinterstangenabschnitts (112) in Betriebsposition eine Klappbewegung des Vorderstangenabschnitts (111) und des Hinterstangenabschnitts (112) in Richtung Unterseite frei ist und eine Klappbewegung in Richtung Oberseite (115) gesperrt ist,
wobei das Gelenk (103) insbesondere frei schwenkbar und frei von einer Arretiereinrichtung ist.

6. Fahrrad (100) gemäß einem der Ansprüche 1 bis 5,
wobei die Fußstange (104) am Gelenk (103) befestigt ist,
wobei das Gelenk (103) insbesondere eine Lagerhülse (701) aufweist, welche derart ausgebildet ist, dass die Trägerstange (110) zum Aus- und Zusammenklappen gelenkig ist.

7. Fahrrad (100) gemäß Anspruch 6,
wobei zumindest der erste Seilspannabschnitt (121) oder der zweite Seilspannabschnitt (122) im Inneren der Lagerhülse (701) befestigt ist oder durch die Lagerhülse (701) teilweise verläuft.

8. Fahrrad (100) gemäß einem der Ansprüche 1 bis 7,
wobei das Seilspannsystem (120) einen dritten Seilspannabschnitt (901) aufweist, welcher entlang einer Oberseite (115) verläuft und an gegenüberliegenden Seiten bezüglich des Gelenkes (103) an der Trägerstange (110) befestigt ist,
wobei der dritte Spannseilabschnitt (901) derart konfiguriert ist, dass dieser durch Spannung ein Drehmoment um das Gelenk (103) erzeugt entgegen dem Drehmoment, welches durch den ersten Spannseilabschnitt (121) und den zweiten Spannseilabschnitt (122) generierbar ist.

9. Fahrrad (100) gemäß Anspruch 8, ferner aufweisend
einen Schnellspanner (902), welcher den dritten Spannseilabschnitt (901) an der Trägerstange (110) lösbar fixiert, und/oder
einen Bremshebel (1001), der an dem Hinterstangenabschnitt (112) schwenkbar befestigt ist, derart, dass der Bremshebel (1001) in Richtung Hinterrad (107) schwenkbar ist und in einer Sperrposition mit dem Hinterrad (107) derart koppelbar ist, dass eine weitere Drehung des Hinterrads (107) verhinderbar ist.

10. Fahrrad (100) gemäß einem der Ansprüche 1 bis 9,
wobei der erste Seilspannabschnitt (121) und der zweite Seilspannabschnitt (122) Abschnitte eines gemeinsamen Seiles bilden,
wobei insbesondere die Fußstange (104) mit dem Fußabschnitt auf dem Seil gleitend aufliegt.

11. Fahrrad (100) gemäß einem der Ansprüche 1 bis 10,
wobei der erste Seilspannabschnitt (121) ein erstes Seil und der zweite Seilspannabschnitt (122) ein, von dem ersten Seil getrenntes zweite Seil ausbilden.

12. Fahrrad (100) gemäß einem der Ansprüche 1 bis 11,
wobei an dem Fußabschnitt, insbesondere klappbare, Fußpedale (109) zur Auflage von Füßen eines Benutzers angeordnet sind,
wobei insbesondere zumindest eines der Fußpedale (109) nach unten ausklappbar ist, um als Fahrradständer zu fungieren,
wobei insbesondere zumindest eines der Fußpedale (109) um eine erste Schwenkachse (1101) schwenkbar an der Trägerstange (104) derart angeordnet ist, dass es aus- und einklappbar ist,
wobei insbesondere zumindest eines der Fußpedale (109) ferner um eine zweite Schwenkachse (1102) schwenkbar an die Fußstange (104) angeordnet ist,
wobei die zweite Schwenkachse (1102) insbesondere senkrecht zu der ersten Schwenkachse (1101) und insbesondere parallel zu einer Erstreckungsrichtung der Trägerstange (104) ausgebildet ist,
wobei insbesondere das Fußpedal (109) mit einer Gelenkhülse (1104) an einer weiteren Gelenkhülse (1105) um die erste Schwenkachse (1101) schwenkbar befestigt ist,
wobei insbesondere die weitere Gelenkhülse (1105) an einer Führungsbuchse (1103) befestigt ist, die mit der Fußstange (104) fest gekoppelt ist,
wobei sich die Führungsbuchse (1103) insbesondere parallel zu der Fußstange (104) erstreckt,
wobei insbesondere eine schräge Auflagefläche (1106) für das Fußpedal (109) an der Fußstange (104) ausgebildet ist,
wobei die schräge Auflagefläche (1106) beabstandet von der Führungsbuchse (1103) angeordnet ist,
wobei die Auflagefläche (1106) derart ausgebildet ist, dass das Fußpedal (109) während dem Schwenken um die zweite Schwenkachse (1102) und um die erste Schwenkachse (1101) zumindest teilweise entlang der schrägen Auflagefläche (1106) aufliegt,
wobei die schräge Auflagefläche (1106) ferner derart ausgebildet ist, dass in einer Betriebsposition das Fußpedal (109) im Wesentlichen senkrecht zu der Fußstange (104) vorliegt und während eines Bewegens des Fußpedals (109) entlang der schrägen Auflagefläche (1106) und eines gleichzeitigen Schwenkens des Fußpedals (109) um zweite erste Drehachse (1102) das Fußpedal (109) um die erste Schwenkachse (1101) schwenkt.

13. Fahrrad (100) gemäß einem der Ansprüche 1 bis 12, ferner aufweisend zumindest eines der folgenden Merkmale
einen Spannhebel (124) zum Einstellen einer Seillänge des ersten Seilspannabschnitts (121) und/oder des zweiten Seilspannabschnitts (122),
wobei die Trägerstange (110) zumindest ein weiteres Gelenk (116) aufweist und zwischen dem Gelenk (103) und dem weiteren Gelenk (116) ein Mittelstangenabschnitt (113) gebildet ist,
wobei insbesondere eine Schwenkachse des Gelenks (103) und eine weitere Schwenkachse des weiteren Gelenks (116) nicht parallel zueinander sind,
wobei zumindest der erste Seilspannabschnitt (121) oder der zweite Seilspannabschnitt (122) mittels einer Befestigungsöse (1204) ausgebildet ist, die um einen Befestigungspin (1202) verläuft, der an der Fußstange (104) befestigt ist,
wobei der Befestigungspin (1202) mit einer Befestigungsschraube (1203) befestigt ist,
wobei der Befestigungspin (1202) eine Zylinderform aufweist und die Befestigungsschraube (1203) parallel zu einer Längsachse (1301) des zylinderförmigen Befestigungspins (1202) verläuft, sodass eine Mantelfläche des zylinderförmigen Befestigungspins (1202) eine Anlagefläche für die Seilabschnitte des Seilspannabschnitts (121) oder des zweiten Seilspannabschnitts (122) bildet, und
wobei die Befestigungsschraube (1203) eine Schraubenachse (1302) aufweist, die parallel zu der Längsachse (1301) des zylinderförmigen Befestigungspins (1202) verläuft,
wobei die Längsachse (1301) des zylinderförmigen Befestigungspins (1202) beabstandet zu der Schraubenachse (1302) der Befestigungsschraube (1203) ausgebildet ist.

14. Fahrrad (100) gemäß einem der Ansprüche 1 bis 13,
wobei an dem Vorderradbereich (101) eine Lenkstange (117) um eine Lenkachse schwenkbar angeordnet ist, an welcher ein Vorderrad (106) befestigbar ist,
wobei insbesondere an der Lenkstange (117) zumindest eine Griffstange (118) angeordnet ist, welche sich von der Lenkstange (117) in einem Winkel von 45° bis 130°, insbesondere 90°, erstreckt,
wobei insbesondere zwischen der Lenkstange (117) und der Griffstange (118) ein Lenkgelenk (123) derart angeordnet ist, dass die Griffstange (118) relativ zu der Lenkstange (117) einklappbar ist und die Griffstange (118) in eingeklappten Zustand parallel zur Lenkstange (117) vorliegt.

15. Verfahren zum Bereitstellen eines Fahrrads (100) zum Bergabfahren gemäß einem der Ansprüche 1 bis 14, wobei das Verfahren aufweist
Aus- und Zusammenklappen der Trägerstange (110), und
Schwenken der Fußstange (104), sodass eine Gewichtskraft auf den Fußabschnitt der Fußstange (104) ausübbar ist, um die Fußstange (104) in Gewichtskraftrichtung auszurichten und das Spannseilsystem (120) gespannt wird.

## Claims

1. A bicycle (100) for downhill driving, the bicycle (100) comprising
a front wheel region (101),
a rear wheel region (102),
a support rod (110) coupling the front wheel region (101) and the rear wheel region (102) to each other,
wherein the support rod (110) comprises at least one joint (103) for unfolding and folding the support rod (110),
wherein the support rod (110) comprises a front rod portion (111) between the front wheel region (101) and the joint (103) and a rear rod portion (112) between the rear wheel region (102) and the joint (103),
a foot rod (104) fastened to the support rod (110) by a coupling portion (105) of the foot rod (104),
wherein the foot rod (104) comprises, at a foot portion of the foot rod (104) opposite the coupling portion (105), a foot rest region (108) for resting feet of a user of the bicycle (100),
a tensioning cable system (120) comprising a first cable tensioning portion (121) and a second cable tensioning portion (122),
**characterized in that**
the foot rod (104) is pivotably fastened to the support rod (110) by the coupling portion (105) of the foot rod (104), and
the first cable tensioning portion (121) is coupled to the foot portion and the front rod portion (111) and the second cable tensioning portion (122) is coupled to the foot portion and the rear rod portion (112) in such a way that, when a weight force is exerted on the foot portion, the foot rod (104) can be aligned in the direction of the weight force and the tensioning cable system (120) can be tensioned.

2. The bicycle (100) according to claim 1,
wherein the support rod (110) comprises a bottom side (114) and a top side (115) opposite the bottom side (114),
wherein the front wheel region (101) comprises a fastening portion for a front wheel (106) and the rear wheel region (102) comprises a fastening portion for a rear wheel (107), which are arranged in a lower region of the bottom side (114),
wherein the foot rod (104) extends from the bottom side (114) of the support rod (110) into the lower region.

3. The bicycle (100) according to claim 2,
wherein the first cable tensioning portion (121) and/or the second cable tensioning portion (122) can be guided from the bottom side (114) onto an opposite top side (115) of the support rod (110) and is fastened, in particular releasably, to the top side (115).

4. The bicycle (100) according to claim 3,
wherein the first cable tensioning portion (121) extends along the top side (115) over the joint (103) in such a way that the first cable tensioning portion (121) is guided at the front rod portion (111) from the bottom side (114) onto the top side (115) of the support rod (110) and is fixed on the support rod portion, which abuts against the joint (103) opposite the front rod portion (111), on the top side (115), and/or
wherein the second cable tensioning portion (122) extends along the top side (115) over the joint (103) in such a way that the second cable tensioning portion (122) is guided at the rear rod portion (112) from the bottom side (114) onto the top side (115) of the support rod (110) and is fixed on the support rod portion, which abuts against the joint (103) opposite the rear rod portion (112), on the top side (115).

5. The bicycle (100) according to one of the claims 2 to 4,
wherein the front rod portion (111) and the rear rod portion (112), in a folded-out state, define an operating position of the bicycle (100),
wherein the joint (103) is designed in such a way that, when the front rod portion (111) and the rear rod portion (112) are in the operating position, a folding movement of the front rod portion (111) and the rear rod portion (112) in the direction of the bottom side is free and a folding movement in the direction of the top side (115) is blocked,
wherein the joint (103) is in particular freely pivotable and free of a locking device.

6. The bicycle (100) according to one of the claims 1 to 5,
wherein the foot rod (104) is fastened to the joint (103),
wherein the joint (103) in particular comprises a bearing sleeve (701) which is designed in such a way that the support rod (110) is articulated for unfolding and folding.

7. The bicycle (100) according to claim 6,
wherein at least the first cable tensioning portion (121) or the second cable tensioning portion (122) is fastened in the interior of the bearing sleeve (701) or runs partially through the bearing sleeve (701).

8. The bicycle (100) according to one of the claims 1 to 7,
wherein the cable tensioning system (120) comprises a third cable tensioning portion (901) which runs along a top side (115) and is fastened to the support rod (110) on opposite sides with respect to the joint (103),
wherein the third cable tensioning portion (901) is configured in such a way that it generates a torque about the joint (103) by tensioning, counter to the torque which can be generated by the first cable tensioning portion (121) and the second cable tensioning portion (122).

9. The bicycle (100) according to claim 8, further comprising
a quick-release tensioner (902) releasably fixing the third cable tensioning portion (901) to the support rod (110), and/or
a brake lever (1001) pivotably fastened to the rear rod portion (112) in such a way that the brake lever (1001) is pivotable in the direction of the rear wheel (107) and, in a blocking position, can be coupled to the rear wheel (107) in such a way that further rotation of the rear wheel (107) can be prevented.

10. The bicycle (100) according to one of the claims 1 to 9,
wherein the first cable tensioning portion (121) and the second cable tensioning portion (122) form portions of a common cable,
wherein in particular the foot rod (104) rests with the foot portion on the cable in a sliding manner.

11. The bicycle (100) according to one of the claims 1 to 10,
wherein the first cable tensioning portion (121) forms a first cable and the second cable tensioning portion (122) forms a second cable which is separate from the first cable.

12. The bicycle (100) according to one of the claims 1 to 11,
wherein, on the foot portion, in particular foldable, foot pedals (109) for supporting feet of a user are arranged,
wherein, in particular, at least one of the foot pedals (109) can be unfolded downwards in order to function as a bicycle stand,
wherein, in particular, at least one of the foot pedals (109) is arranged on the support rod (104) pivotably about a first pivot axis (1101) in such a way that it can be unfolded and folded,
wherein, in particular, at least one of the foot pedals (109) is further arranged on the foot rod (104) pivotably about a second pivot axis (1102),
wherein the second pivot axis (1102) is designed in particular perpendicular to the first pivot axis (1101) and in particular parallel to an extension direction of the support rod (104),
wherein in particular the foot pedal (109) is fastened by a joint sleeve (1104) to a further joint sleeve (1105) pivotably about the first pivot axis (1101),
wherein in particular the further joint sleeve (1105) is fastened to a guide bush (1103) which is fixedly coupled to the foot rod (104),
wherein the guide bush (1103) extends in particular parallel to the foot rod (104),
wherein in particular an oblique support surface (1106) for the foot pedal (109) is formed on the foot rod (104),
wherein the oblique support surface (1106) is arranged spaced apart from the guide bush (1103),
wherein the support surface (1106) is designed in such a way that the foot pedal (109) rests at least partially along the oblique support surface (1106) during the pivoting about the second pivot axis (1102) and about the first pivot axis (1101), wherein the oblique support surface (1106) is further designed in such a way that, in an operating position, the foot pedal (109) is substantially perpendicular to the foot rod (104) and, during a movement of the foot pedal (109) along the oblique support surface (1106) and a simultaneous pivoting of the foot pedal (109) about the first pivot axis (1102), the foot pedal (109) pivots about the first pivot axis (1101).

13. The bicycle (100) according to one of the claims 1 to 12, further comprising at least one of the following features
a tensioning lever (124) for adjusting a cable length of the first cable tensioning portion (121) and/or of the second cable tensioning portion (122), wherein the support rod (110) comprises at least one further joint (116) and a central rod portion (113) is formed between the joint (103) and the further joint (116),
wherein in particular a pivot axis of the joint (103) and a further pivot axis of the further joint (116) are not parallel to each other,
wherein at least the first cable tensioning portion (121) or the second cable tensioning portion (122) is formed by means of a fastening eye (1204) which runs around a fastening pin (1202) which is fastened to the foot rod (104), wherein the fastening pin (1202) is fastened with a fastening screw (1203), wherein the fastening pin (1202) has a cylindrical shape and the fastening screw (1203) runs parallel to a longitudinal axis (1301) of the cylindrical fastening pin (1202), so that a lateral surface of the cylindrical fastening pin (1202) forms a contact surface for the cable portions of the cable tensioning portion (121) or of the second cable tensioning portion (122), and
wherein the fastening screw (1203) has a screw axis (1302) which runs parallel to the longitudinal axis (1301) of the cylindrical fastening pin (1202),
wherein the longitudinal axis (1301) of the cylindrical fastening pin (1202) is formed spaced apart from the screw axis (1302) of the fastening screw (1203).

14. The bicycle (100) according to one of the claims 1 to 13,
wherein a steering rod (117) is arranged at the front wheel region (101) pivotably about a steering axis, on which steering rod a front wheel (106) can be fastened,
wherein in particular at least one handle rod (118) is arranged at the steering rod (117), which handle rod extends from the steering rod (117) at an angle of 45° to 130°, in particular 90°,
wherein in particular a steering joint (123) is arranged between the steering rod (117) and the handle rod (118) in such a way that the handle rod (118) can be folded in relative to the steering rod (117) and the handle rod (118), in the folded-in state, is parallel to the steering rod (117).

15. A method for providing a bicycle (100) for downhill driving according to one of the claims 1 to 14, wherein the method comprises
unfolding and folding the support rod (110), and
pivoting the foot rod (104), so that a weight force can be exerted on the foot portion of the foot rod (104), in order to align the foot rod (104) in the direction of the weight force and the tensioning cable system (120) is tensioned.

## Revendications

1. Vélo (100) destiné à la descente, le vélo (100) comprenant
une région de roue avant (101),
une région de roue arrière (102),
une barre de support (110) qui couple la région de roue avant (101) et la région de roue arrière (102),
dans lequel la barre de support (110) présente au moins une articulation (103) afin de déplier et replier la barre de support (110),
dans lequel la barre de support (110) présente une section de barre avant (111) entre la région de roue avant (101) et l'articulation (103) et une section de barre arrière (112) entre la région de roue arrière (102) et l'articulation (103),
une barre de pied (104), qui est fixée à la barre de support (110) par une section d'accouplement (105) de la barre de pied (104),
dans lequel la barre de pied (104) présente, au niveau d'une section de pied de la barre de pied (104) opposée à la section d'accouplement (105), une région formant repose-pieds (108) permettant de poser les pieds d'un utilisateur du vélo (100),
un système de câble tenseur (120) avec une première section de câble tenseur (121) et une deuxième section de câble tenseur (122),
**caractérisé en ce que**
la barre de pied (104) est fixée de manière pivotante à la barre de support (110) par la section d'accouplement (105) de la barre de pied (104), et
la première section de câble tenseur (12i) au niveau de la section de pied et de la section de barre avant (111) et la deuxième section de câble tenseur (122) au niveau de la section de pied et de la section de barre arrière (112) sont couplées de telle manière que, lorsqu'une force correspondant à un poids est exercée sur la section de pied, la barre de pied (104) peut être orientée dans le sens de la force correspondant à un poids et le système de câble tenseur (120) peut être mis en tension.

2. Vélo (100) selon la revendication 1,
dans lequel la barre de support (110) présente un côté inférieur (114) et un côté supérieur (115) opposé au côté inférieur (114),
dans lequel la région de roue avant (101) présente une section de fixation pour une roue avant (106) et la région de roue arrière (102) présente une section de fixation pour une roue arrière (1.07), lesquelles sections sont agencées dans une région inférieure du côté inférieur (114),
dans lequel la barre de pied (104) s'étend depuis le côté inférieur (114) de la barre de support (110) jusque dans la région inférieure.

3. Vélo (100) selon la revendication 2,
dans lequel la première section de câble tenseur (121) et/ou la deuxième section de câble tenseur (122) peuvent être guidées depuis le côté inférieur (114) jusque sur un côté supérieur (115) opposé de la barre de support (110) et sont fixées, en particulier de manière amovible, sur le côté supérieur (115).

4. Vélo (100) selon la revendication 3,
dans lequel la première section de câble tenseur (121) s'étend le long du côté supérieur (115) au-dessus de l'articulation (103) de telle manière que la première section de câble tenseur (121) est guidée au niveau de la section de barre avant (111) depuis le côté inférieur (114) jusque sur le côté supérieur (115) de la barre de support (110) et est immobilisée sur le côté supérieur (115) au niveau de la section de barre de support qui repose contre l'articulation (103) face à la section de barre avant (111), et/ou
dans lequel la deuxième section de câble tenseur (121) s'étend le long du côté supérieur (115) au-dessus de l'articulation (103) de telle manière que la deuxième section de câble tenseur (122) est guidée au niveau de la section de barre arrière (112) depuis le côté inférieur (114) jusque sur le côté supérieur (115) de la barre de support (110) et est immobilisée sur le côté supérieur (115) au niveau de la section de barre de support qui repose contre l'articulation (103) face à la section de barre arrière (112).

5. Vélo (100) selon l'une quelconque des revendications 2 à 4,
dans lequel la section de barre avant (111) et la section de barre arrière (112), à l'état déplié, définissent une position de fonctionnement du vélo (100)
dans lequel l'articulation (103) est réalisée de telle manière que, en présence de la section de barre avant (111) et de la section de barre arrière (112) en position de fonctionnement, un mouvement de pliage de la section de barre avant (111) et de la section de barre arrière (112) en direction du côté inférieur est libre et un mouvement de pliage en direction du côté supérieur (115) est bloqué,
dans lequel l'articulation (103) peut en particulier pivoter librement et est exempte d'un dispositif de verrouillage.

6. Vélo (100) selon l'une quelconque des revendications 1 à 5,
dans lequel la barre de pied (104) est fixée à l'articulation (103),
dans lequel l'articulation (103) présente en particulier un manchon de palier (701) qui est réalisé de telle manière que la barre de support (110) est articulée en vue du dépliage et du repliage.

7. Vélo (100) selon la revendication 6,
dans lequel au moins la première section de câble tenseur (121) ou la deuxième section de câble tenseur (122) est fixée à l'intérieur du manchon de palier (701) ou s'étend partiellement à travers le manchon de palier (701).

8. Vélo (100) selon l'une quelconque des revendications 1 à 7,
dans lequel le système de câble tenseur (120) présente une troisième section de câble tenseur (901) qui s'étend le long d'un côté supérieur (115) et est fixée à la barre de support (110) sur des côtés se faisant face par rapport à l'articulation (103),
dans lequel la troisième section de câble tenseur (901) est configurée de telle manière qu'elle génère par tension un couple autour de l'articulation (103) à l'encontre du couple qui peut être généré par la première section de câble tenseur (121) et la deuxième section de câble tenseur (122).

9. Vélo (100) selon la revendication 8, comprenant en outre
un dispositif de mise en tension rapide (902) qui immobilise de manière amovible la troisième section de câble tenseur (901) sur la barre de support (110), et/ou
un levier de frein (1001) qui est fixé de manière pivotante à la section de barre arrière (112) de telle manière que le levier de frein (1001) peut pivoter en direction de la roue arrière (107) et peut être couplé à la roue arrière (107) dans une position de blocage de telle manière qu'une rotation supplémentaire de la roue arrière (107) peut être empêchée.

10. Vélo (100) selon l'une quelconque des revendications 1 à 9,
dans lequel la première section de câble tenseur (1.21) et la deuxième section de câble tenseur (122) forment des sections d'un câble commun,
dans lequel la section de pied de la barre de pied (104) repose en particulier de manière coulissante sur le câble.

11. Vélo (100) selon l'une quelconque des revendications 1 à 10,
dans lequel la première section de câble tenseur (121) forme un premier câble et la deuxième section de câble tenseur (122) forme un deuxième câble séparé du premier câble.

12. Vélo (100) selon l'une quelconque des revendications 1 à 11,
dans lequel des pédales (109), en particulier pliables, sont agencées au niveau de la section de pied afin de fournir un appui aux pieds d'un utilisateur,
dans lequel au moins une des pédales (109) peut en particulier être repliée vers le bas afin de faire office de béquille de vélo,
dans lequel au moins une des pédales (109) est agencée en particulier au niveau de la barre de support (104) de manière à pouvoir pivoter autour d'un premier axe de pivotement (1101) de manière à pouvoir être dépliée et repliée,
dans lequel au moins une des pédales (109) est en outre agencée en particulier au niveau de la barre de pied (104) de manière à pouvoir pivoter autour d'un deuxième axe de pivotement (1102), dans lequel le deuxième axe de pivotement (1102) est en particulier perpendiculaire au premier axe de pivotement (1101) et en particulier parallèle à une direction d'extension de la barre de support (104),
dans lequel la pédale (109) est en particulier fixée par un manchon d'articulation (1104) au niveau d'un manchon d'articulation (1105) supplémentaire de manière à pouvoir pivoter autour du premier axe de pivotement (1101),
dans lequel le manchon d'articulation (1105) supplémentaire est en particulier fixé à un manchon de guidage (1103) qui est couplé de manière fixe à la barre de pied (104),
dans lequel le manchon de guidage (1103) s'étend en particulier parallèlement à la barre de pied (104),
dans lequel une surface d'appui oblique (1106) destinée à la pédale (109) est en particulier réalisée au niveau de la barre de pied (104),
dans lequel la surface d'appui oblique (1106) est espacée par rapport au manchon de guidage (1103),
dans lequel la surface d'appui (1106) est réalisée de telle manière que la pédale (109) repose au moins partiellement le long de la surface d'appui oblique (1106) pendant le pivotement autour du deuxième axe de pivotement (1102) et autour du premier axe de pivotement (1101),
dans lequel la surface d'appui oblique (1106) est en outre réalisée de telle manière que, en position de fonctionnement, la pédale (109) est essentiellement perpendiculaire à la barre de pied (104), et la pédale (109) pivote autour du premier axe de pivotement (1101) pendant le déplacement de la pédale (109) le long de la surface d'appui oblique (1106) et le pivotement simultané de la pédale (109) autour du deuxième axe de rotation (1102).

13. Vélo (100) selon l'une quelconque des revendications 1 à 12, comprenant en outre au moins une des caractéristiques ci-dessous : un levier de tension (124) permettant de régler une longueur de câble de la première section de câble tenseur (121) et/ou de la deuxième section de câble tenseur (122), dans lequel la barre de support (110) présente au moins une articulation (116) supplémentaire et une section de barre centrale (113) est formée entre l'articulation (103) et l'articulation (116) supplémentaire,
dans lequel un axe de pivotement de l'articulation (103) et un axe supplémentaire de pivotement de l'articulation (116) supplémentaire ne sont en particulier pas parallèles l'un à l'autre,
dans lequel au moins la première section de câble tenseur (121) ou la deuxième section de câble tenseur (122) est réalisée au moyen d'un œillet de fixation (1204) qui s'étend autour d'une broche de fixation (1202) fixée à la barre de pied (104),
dans lequel la broche de fixation (1202) est fixée par une vis de fixation (1203),
dans lequel la broche de fixation (1202) présente une forme cylindrique et la vis de fixation (1203) s'étend parallèlement à un axe longitudinal (1301) de la broche de fixation cylindrique (1202), de sorte qu'une surface d'enveloppe de la broche de fixation cylindrique (1202) forme une surface d'appui pour les sections de câble de la section de câble tenseur (121) ou de la deuxième section de câble tenseur (122), et
dans lequel la vis de fixation (1203) présente un axe de vis (1302) qui s'étend de manière parallèle à l'axe longitudinal (1301) de la broche de fixation cylindrique (1202),
dans lequel l'axe longitudinal (1301) de la broche de fixation cylindrique (1202) est réalisé à distance de l'axe de vis (1302) de la vis de fixation (1203).

14. Vélo (100) selon l'une quelconque des revendications 1 à 13,
dans lequel une barre de direction (117), sur laquelle peut être fixée une roue avant (106), est agencée au niveau de la région de roue avant (101) de manière à pouvoir pivoter autour d'un axe de direction,
dans lequel au moins une barre de préhension (118), qui s'étend à partir de la barre de direction (117) selon un angle compris entre 45° et 130°, en particulier un angle de 90°, est agencée en particulier sur la barre de direction (117),
dans lequel une articulation de direction (123) est agencée entre la barre de direction (117) et la barre de préhension (118) de telle manière que la barre de préhension (118) peut être repliée par rapport à la barre de direction (117) et de telle manière que la barre de préhension (118) est parallèle à la barre de direction (117) à l'état replié.

15. Procédé de fourniture d'un vélo (100) destiné à la descente selon l'une quelconque des revendications 1 à 14, dans lequel le procédé comprend les étapes consistant à :
déplier et replier la barre de support (110), et
pivoter la barre de pied (104) de sorte qu'une force correspondant à un poids peut être exercée sur la section de pied de la barre de pied (104) afin d'aligner la barre de pied (104) dans le sens de la force correspondant à un poids et de mettre en tension le système de câble tenseur (120).
